(19) Europäisches Patentamt / European Patent Office / Office européen des brevets

(11) **EP 2 644 551 B1**

(12) **EUROPEAN PATENT SPECIFICATION**

(45) Date of publication and mention
of the grant of the patent:
**30.11.2016 Bulletin 2016/48**

(51) Int Cl.:
*G01N 21/89* *(2006.01)*     *B65H 61/00* *(2006.01)*
*B65H 63/06* *(2006.01)*     *G01N 21/952* *(2006.01)*

(21) Application number: **13154469.4**

(22) Date of filing: **07.02.2013**

---

(54) **Yarn travelling information acquiring device and method**

Vorrichtung und Verfahren zur Erfassung von Garnstreckeninformationen

Dispositif d'acquisition d'informations de déplacement de fil et procédé

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2012 JP 2012073809**

(43) Date of publication of application:
**02.10.2013 Bulletin 2013/40**

(73) Proprietor: **Murata Machinery, Ltd.
Kyoto-shi, Kyoto 601-8326 (JP)**

(72) Inventor: **Minamino, Katsushi
Kyoto, Kyoto 612-8686 (JP)**

(74) Representative: **Weickmann & Weickmann
PartmbB
Postfach 860 820
81635 München (DE)**

(56) References cited:
**EP-A2- 2 423 144**

---

**Description**

BACKGROUND OF THE INVENTION

1. Field of the Invention

The present invention relates to a yarn travelling information acquiring device and method for detecting a state of travelling yarn.

2. Description of the Related Art

In a yarn winding machine for winding yarn, information relating to a travelling state of the yarn is sometimes necessary to control the winding of the yarn, and the like. Such a yarn winding machine thus includes a yarn travelling information acquiring device for acquiring information relating to the travelling state of the yarn (yarn travelling information). The travelling state may include, for example, a yarn travelling speed of the yarn.
A yarn travelling information acquiring device according to the preamble of claim 1 is disclosed in Unexamined Japanese Patent Publication No. 2012-051672. The yarn travelling information acquiring device disclosed in the relevant document includes two yarn thickness unevenness detecting sensors for detecting the yarn thickness unevenness, and samples signals detected by the two yarn thickness unevenness detecting sensors at a predetermined sampling period. The yarn travelling information acquiring device compares the obtained two yarn thickness unevenness signals with each other to detect the yarn travelling speed.

BRIEF SUMMARY OF THE INVENTION

In the yarn winding machine, for example, since a very long yarn is wound, even if the error in the detection of the yarn travelling speed by the yarn travelling information acquiring device is very small, the error in the length of the wound yarn becomes large. A yarn travelling information acquiring device capable of acquiring the travelling state of the yarn at a higher accuracy is desired.
It is an object of the present invention to provide a yarn travelling information acquiring device capable of acquiring the yarn travelling state at a higher accuracy.
A yarn travelling information acquiring device of the present invention includes a first detecting section, a second detecting section, a similarity degree evaluating section, a weighting processing section, and a travelling information acquiring section. The first detecting section is adapted to detect thickness unevenness of a travelling yarn and to output a first yearn thickness unevenness signal. The second detecting section is arranged upstream in a yarn travelling direction at a distance from the first detecting section and adapted to detect the thickness unevenness of the yarn and to output a second yarn thickness unevenness signal. The similarity degree evaluating section is adapted to determine a plurality of similarity degrees of the first yarn thickness unevenness signal and the second yarn thickness unevenness signal in accordance with the first yarn thickness unevenness signal acquired within a first time range, and the second yarn thickness unevenness signal acquired within a second time range, the second time range being longer than the first time range. The weighting processing section is adapted to perform a weighting processing on each of the plurality of the similarity degrees using a weighting factor and to calculate a plurality of weighted similarity degrees, the weighting factor being designated by a weighting curve according to a speed ratio being obtained in accordance with a reference delay amount and a calculated delay amount of the first yarn thickness unevenness signal and the second yarn thickness unevenness signal - The travelling information acquiring section is adapted to calculate a time delay between the first yarn thickness unevenness signal and the second yarn thickness unevenness signal in accordance with a maximum weighted similarity degree among the plurality of the weighted similarity degrees, and to acquire travelling information of the yarn in accordance with the distance and the time delay.
The yarn travelling information acquiring device performs the weighting processing on each of the plurality of similarity degrees using the weighting factor designated by the weighting curve corresponding to the speed ratio in accordance with the delay amount of the first yarn thickness unevenness signal and the second yarn thickness unevenness signal. The weight can be appropriately set for every delay amount by using the weighting curve corresponding to the speed ratio in accordance with the delay amount. By using the weighting curve corresponding to the speed ratio in accordance with the delay amount, the weighting processing can be more accurately performed and the yarn travelling state of the yarn can be more accurately acquired.
The weighting factor is preferably designated by the weighting curve having one maximum value. In this case, the weighting can be appropriately performed on the similarity degree by the weighting curve having one maximum value.
The maximum value of the weighting curve is preferably set in accordance with the delay amount calculated in past by the travelling information acquiring section. In this case, an appropriate weighting curve can be set in view of the delay amount calculated in the past, and more accurate travelling information of the yarn can be acquired.

The yarn travelling information acquiring device further includes a sampling speed acquiring section adapted to acquire a sampling speed of the yarn. The maximum value of the weighting curve is preferably set in accordance with the delay amount of when the yarn travelled under the sampling speed. In this case, an appropriate weighting curve can be set in view of the sampling speed, and more accurate travelling information of the yarn can be acquired.

The yarn travelling information acquiring device further includes a sampling speed acquiring section adapted to acquire a sampling speed of the yarn. The weighting curve includes a history weighting curve and a sampling speed weighting curve, the history weighting curve being a curve in which the maximum value is set in accordance with the travelling information acquired in past by the travelling information acquiring section, and the sampling speed weighting curve being a curve in which the maximum value is set in accordance with the travelling information of when the yarn travelled under the sampling speed. The weighting processing section is adapted to perform the weighting processing using the history weighting curve and the weighting processing using the sampling speed weighting curve. The travelling information acquiring section is preferably adapted to extract as a target weighted similarity degree, the weighted similarity degree satisfying an extracting condition, from the plurality of the weighted similarity degrees on which the weighting processing has been performed using the history weighting curve and the plurality of the weighted similarity degrees on which the weighting processing has been performed using the sampling speed weighting curve, and to acquire travelling information of the yarn in accordance with the target weighted similarity degree. In this case, an appropriate history weighting curve can be set in view of the delay amount calculated in past. An appropriate sampling speed weighting curve can be set in view of the sampling speed. The target weighted similarity degree can be extracted in accordance with the weighted similarity degree weighted using the history weighting curve and the sampling speed weighting curve. An appropriate target weighted similarity degree that takes into consideration the delay amount calculated in past and the sampling speed thus can be extracted, and more accurate yarn travelling information can be acquired.

The travelling information acquiring section is preferably adapted to correct the weighting factor designated by the history weighting curve and the weighting factor designated by the sampling speed weighting curve in accordance with the target weighted similarity degree calculated in past. In this case, the history weighting curve and the sampling speed weighting curve that take into consideration the target weighted similarity degree calculated in past can be obtained, and the weighting can be more appropriately performed.

The travelling information acquiring section is preferably adapted to increase a value of the weighting factor designated by the history weighting curve accompanying an increase in the target weighted similarity degree calculated in past, and to increase a value of the weighting factor designated by the sampling speed weighting curve accompanying a decrease in the target weighted similarity degree calculated in past. If the target weighted similarity degree calculated in past is large, it can be assumed that the history weighting curve has higher reliability than the sampling speed weighting curve. The history weighting curve and the sampling speed weighting curve can be appropriately corrected according to the actual situation by increasing the weighting factor designated by the history weighting curve accompanying an increase in the target weighted similarity degree calculated in past.

The travelling information acquiring section is adapted to extract as the target weighted similarity degree, the weighted similarity degree having a maximum similarity degree value among the plurality of the weighted similarity degrees. When the travelling information acquiring section fails in the extraction, the travelling information acquiring section is adapted to extract as the target weighted similarity degree, a weighted similarity degree on which the weighting processing has been performed on a similarity degree having a maximum value among the plurality of the similarity degrees calculated by the similarity degree evaluating section. When the travelling information acquiring section fails in said extraction, the travelling information acquiring section is adapted to extract from the plurality of the weighted similarity degrees as the target weighted similarity degree, the weighted similarity degree having a value closest to the delay amount calculated in past when the delay amount is calculated for each of the plurality of the weighted similarity degrees. In this case, even if a plurality of the weighted similarity degrees exist to be extracted as the target weighted similarity degree, a more appropriate weighted similarity degree can be extracted as the target weighted similarity degree.

The similarity degree evaluating section is adapted to calculate a plurality of similarity-degree maximum points which are respectively maximum points of the plurality of the similarity degrees. The weighting processing section is preferably adapted to perform the weighting processing on the similarity-degree maximum points and to calculate the weighted similarity degrees. In this case, the weighting processing is performed only on the maximum point of the similarity degree. Only the value of the similarity degree thus can be raised and lowered (perform weighting) with respect to the maximum points without changing the position of the delay amount, and the weighting can be more accurately performed.

The first yarn thickness unevenness signal and the second yarn thickness unevenness signal are sampled at a sampling time interval. The yarn travelling information acquiring device further includes a measuring section adapted to measure the sampling time interval. The travelling information acquiring section is preferably adapted to calculate the time delay in accordance with the sampling time interval measured by the measuring section. In this case, the time delay, which is the time when the yarn travelled by the delay amount, can be obtained in accordance with the sampling time interval. The time delay thus can be more accurately obtained even if the yarn is accelerated or decelerated, for example.

A yarn processing device preferably includes the yarn travelling information acquiring device described above, a yarn processing section adapted to perform a processing on the yarn, and a control section adapted to control the processing performed by the yarn processing section in accordance with the travelling information of the yarn acquired by the yarn travelling information acquiring device. In this case, the yarn processing section can be controlled using accurate travelling information of the yarn acquired by the yarn travelling information acquiring device.

According to the present invention, the travelling state of the yarn can be more accurately acquired.

BRIEF DESCRIPTION OF THE DRAWINGS

FIG. 1 is a side view of a winder unit;
FIG. 2 is a front view of the winder unit;
FIG. 3 is a block diagram illustrating a configuration of a clearer;
FIG. 4 is a graph illustrating data series accumulated in a ring buffer;
FIG. 5 is a view describing a calculation frame;
FIG. 6 is a view describing bias component removal and normalization;
FIG. 7 is a graph illustrating a case in which a plurality of peaks of similarity degrees exist;
FIG. 8 is a graph in which only maximum points of the similarity degrees are extracted;
FIG. 9 is a flowchart of a yarn travelling speed acquiring processing;
FIG. 10 is a flowchart of an adoption determination processing;
FIG. 11 is a view describing weighting by a weighting curve;
FIG. 12A and FIG. 12B are graphs illustrating an example in which weighting is performed on the similarity degree;
FIG. 13 is a view illustrating a state in which a downstream frame is moved;
FIG. 14A to FIG. 14C are views illustrating a calculation procedure for calculating a history weighting curve;
FIG. 14D is a view illustrating an example of the history weighting curve;
FIG. 15A and FIG. 15B are views illustrating a procedure for calculating a sampling speed weighting curve; and
FIG. 15C is a view illustrating an example of the sampling speed weighting curve.

DETAILED DESCRIPTION OF PREFERRED EMBODIMENTS

Preferred embodiments of the present invention will be described below with reference to the drawings.

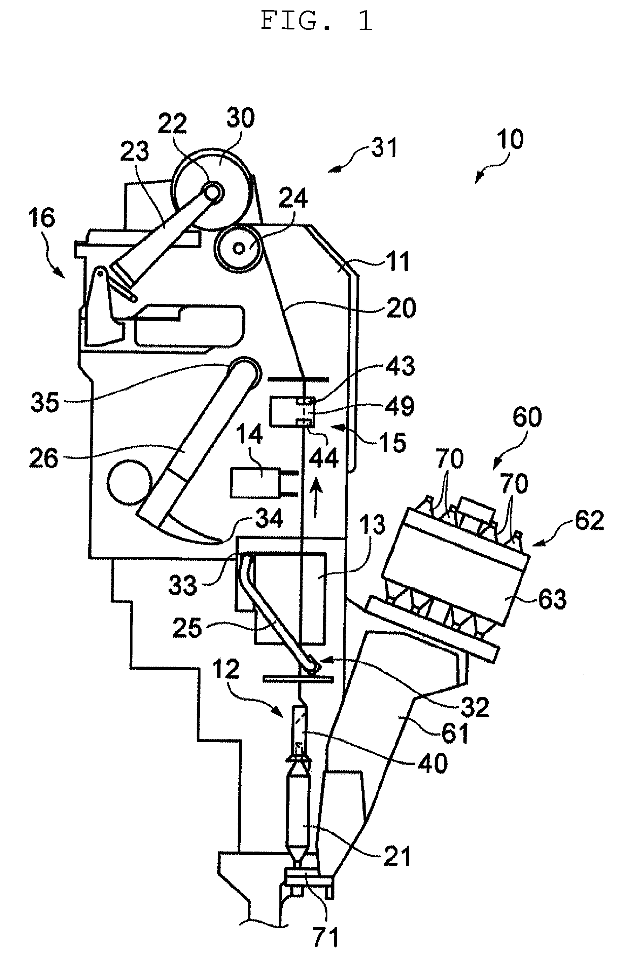

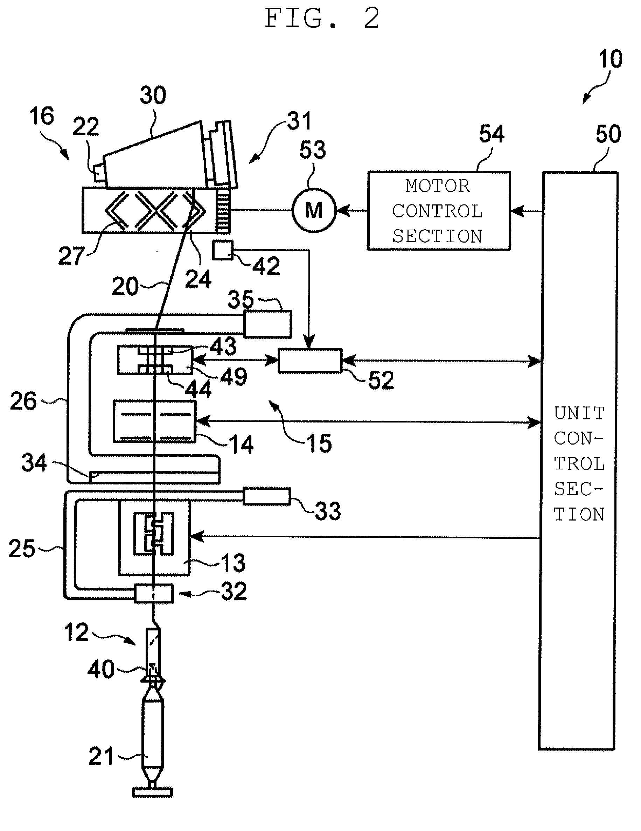

A winder unit (yarn processing device) 10 illustrated in FIG. 1 and FIG. 2 unwinds a spun yarn 20 from a yarn supplying bobbin 21 and winds the spun yarn 20 around a winding bobbin 22 while traversing the spun yarn 20 to form a package 30 of a prescribed length and a prescribed form. An automatic winder of the present embodiment includes a plurality of winder units 10 arranged in a line, and a main control device (not illustrated) arranged at one end in a direction in which the winder units 10 are arranged.

Each of the winder units 10 includes a unit frame 11 (FIG. 1) arranged on a left or right side in front view, and a winding unit main body 16 arranged at a side of the unit frame 11. The winding unit main body (yarn processing section) 16 includes a winding section 31. The winding unit main body 16 includes a magazine-type supplying device 60 and a supplying bobbin holding section 71.

As illustrated in FIG. 1, the magazine-type supplying device 60 includes a magazine holding section 61, which extends diagonally toward the upper direction of the front surface from the lower part of the winder unit 10, and a bobbin accommodating device 62, which is attached to a distal end of the magazine holding section 61. The bobbin accommodating device 62 includes a magazine can 63 including a plurality of accommodation holes to which a supply bobbin 70 can be respectively set. The magazine can 63 can be intermittently driven, rotated, and fed by a motor (not illustrated), and the magazine can 63 can drop the supply bobbin 70 one at a time to a bobbin supply path (not illustrated) of the magazine holding section 61 by the intermittent drive and a control valve (not illustrated) of the magazine can 63. The supply bobbin 70 is introduced to the supplying bobbin holding section 71.

In place of the magazine-type supplying device 60 illustrated in FIG. 1, a transport conveyor (not illustrated) arranged at a lower part of the automatic winder may be used to supply the yarn supplying bobbin 21 from a yarn supplying bobbin supplying section (not illustrated) to the supplying bobbin holding section 71 of each winder unit 10.

The winding section 31 winds the spun yarn 20, which has been unwound from the yarn supplying bobbin 21, around the winding bobbin 22 to form the package 30. Specifically, the winding section 31 includes a cradle 23, which is configured to be able to grip the winding bobbin 22, and a winding drum 24, which is adapted to traverse the spun yarn 20 and to drive the winding bobbin 22. The cradle 23 can swing in a direction of approaching or separating with respect to the winding drum 24. The package 30 is thus brought into contact with or separated from the winding drum 24. As illustrated in FIG. 2, a spiral-shaped traverse groove 27 is formed on an outer peripheral surface of the winding drum 24, and the spun yarn 20 is traversed by the traverse groove 27.

The winding bobbin 22 is rotated by driving and rotating the winding drum 24 arranged facing the winding bobbin 22. The spun yarn 20 is wound around the rotating winding bobbin 22 while being traversed by the traverse groove 27. As illustrated in FIG. 2, the winding drum 24 is coupled to an output shaft of a drum drive motor 53. An operation of the drum drive motor 53 is controlled by a motor control section 54. The motor control section 54 performs control to operate and stop the drum drive motor 53 in response to a control signal from a unit control section (control section) 50.

A rotation sensor 42 is attached to the winding drum 24. The rotation sensor 42 is electrically connected to an analyzer 52 or the like arranged in a clearer 15, to be described later. The rotation sensor 42 is configured as a rotary encoder, for example, and transmits a pulse signal to the analyzer 52 every time the winding drum 24 rotates by a prescribed angle. The pulse signal output by the rotation sensor 42 is referred to as a rotation pulse signal.

The winding unit main body 16 has a configuration in which an unwinding assisting device 12, a tension applying device 13, a yarn joining device 14, and a clearer head 49 of the clearer (yarn travelling information acquiring device) 15 are arranged in this order from the yarn supplying bobbin 21 side on a yarn travelling path between the yarn supplying bobbin 21 and the winding drum 24.

The unwinding assisting device 12 assists the unwinding of the spun yarn 20 from the yarn supplying bobbin 21 by lowering a regulating member 40 covering a core tube of the yarn supplying bobbin 21 accompanying unwinding of the spun yarn 20 from the yarn supplying bobbin 21. The regulating member 40 makes contact with a balloon that is formed at an upper part of the yarn supplying bobbin 21 when the spun yarn 20 unwound from the yarn supplying bobbin 21 is swung around, thus applying an appropriate tension to the balloon and assisting unwinding of the spun yarn 20.

The tension applying device 13 applies a tension on the travelling spun yarn 20. The tension applying device 13 applies constant tension to the spun yarn 20, thereby improving quality of the package 30.

The clearer 15 detects defects by detecting thickness unevenness of the spun yarn 20 by an appropriate sensor. Specifically, the clearer 15 includes the clearer head 49 and the analyzer 52 (FIG. 2). Two yarn unevenness detecting sensors 43 and 44 are arranged in the clearer head 49. The yarn defect such as slub can be detected by processing signals from the yarn unevenness detecting sensors 43 and 44 by the analyzer 52. A cutter (not illustrated) for immediately cutting the spun yarn 20 when the clearer 15 detects a yarn defect is arranged in proximity to the clearer head 49.

The clearer 15 may also function as a yarn travelling information acquiring device for acquiring travelling information of the spun yarn 20. The travelling information of the spun yarn 20 is information indicating a state of the travelling spun yarn 20. The configuration of acquiring the travelling information of the spun yarn 20 by the clearer 15 will be described later.

The yarn joining device 14 joins lower yarn from the yarn supplying bobbin 21 and upper yarn from the package 30 after the clearer 15 detects a yarn defect and cuts the spun yarn 20, after yarn breakage during unwinding of the spun yarn 20 from the yarn supplying bobbin 21, and the like. The yarn joining device 14 may be a mechanical-type or a type that uses fluid such as compressed air.

A lower yarn guiding pipe 25 adapted to catch and guide the lower yarn from the yarn supplying bobbin 21, and an upper yarn guiding pipe 26 adapted to catch and guide the upper yarn from the package 30 are respectively arranged on the lower side and the upper side of the yarn joining device 14. A suction port 32 is formed at a tip end of the lower yarn guiding pipe 25. A suction mouth 34 is arranged at a tip end of the upper yarn guiding pipe 26. The lower yarn guiding pipe 25 and the upper yarn guiding pipe 26 are respectively connected to an appropriate negative pressure source (not illustrated), and a suction flow can be generated at the suction port 32 and the suction mouth 34.

At the time of yarn cut or yarn breakage, the suction port 32 of the lower yarn guiding pipe 25 catches the lower yarn at a position illustrated in FIG. 1 and FIG. 2, and is thereafter swung upward around a shaft 33 to guide the lower yarn to the yarn joining device 14. Almost at the same time, the upper yarn guiding pipe 26 is swung upward around a shaft 35 from the illustrated position to catch, by the suction mouth 34, the upper yarn unwound from the package 30. Subsequently, the upper yarn guiding pipe 26 is swung downward around the shaft 35 to guide the upper yarn to the yarn joining device 14. The yarn joining device 14 then performs the yarn joining operation of the lower yarn and the upper yarn.

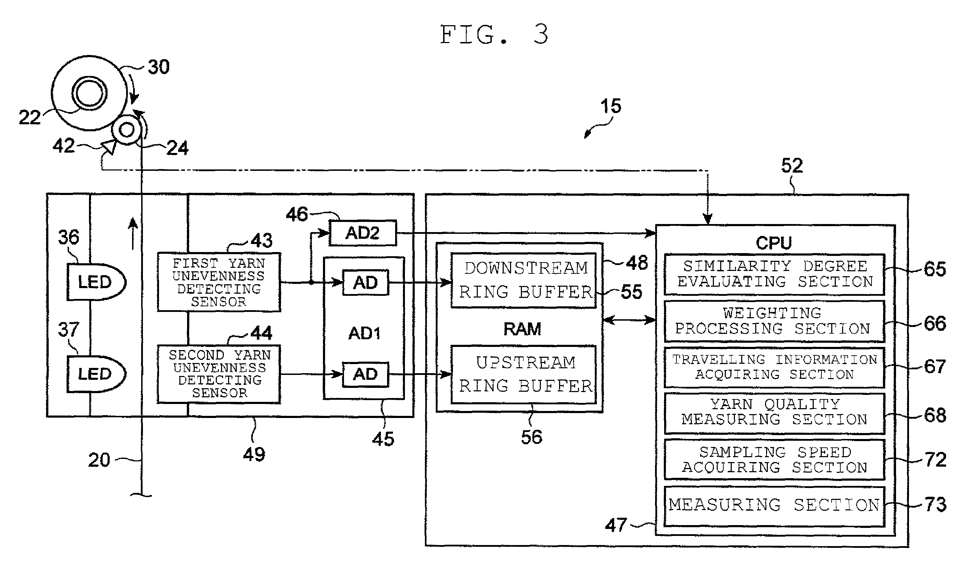

Next, the clearer 15 will be described in detail with reference to FIG. 3.

The clearer head 49 includes the first yarn unevenness detecting sensor (first detecting section) 43, the second yarn unevenness detecting sensor (second detecting section) 44, and two A/D converters 45 and 46. The analyzer 52 is configured by hardware such as a Central Processing Unit (CPU) 47, a Random Access Memory (RAM) 48, and a Read Only Memory (ROM) (not illustrated), and software such as program stored in the ROM. With the cooperative operation of the hardware and the software, the CPU 47 can be configured to function as a similarity degree evaluating section 65, a weighting Processing section 66, a travelling information acquiring section 67, a yarn quality measuring section 68, a sampling speed acquiring Section 72, a measuring section 73, and the like. The pulse signals from the rotation sensor 42 are input to the analyzer 52.

The first yarn unevenness detecting sensor 43 and the second yarn unevenness detecting sensor 44 are arranged side by side with an appropriate distance in the yarn travelling direction, where the first yarn unevenness detecting sensor 43 is arranged downstream and the second yarn unevenness detecting sensor 44 is arranged upstream. In the present embodiment, the yarn unevenness detecting sensors 43 and 44 are adapted to detect thickness unevenness of the spun yarn 20. Specifically, the yarn unevenness detecting sensors 43 and 44 are configured as optical sensors. Light Emitting Diodes LED) 36 and 37 are arranged as light sources on an opposite side the yarn unevenness detecting sensors 43 and 44 with a yarn path of the spun yarn 20 therebetween. The yarn unevenness detecting sensors 43 and 44 respectively detect a light receiving amount from the LEDs 36 and 37. Since the light receiving amount of the yarn unevenness detecting sensors 43 and 44 changes when the thickness of the travelling spun yarn 20 changes, the clearer 15 can detect the thickness unevenness of the spun yarn 20. The output signals (yarn thickness unevenness signals) from the yarn unevenness detecting sensors 43 and 44 are converted from analog signals to digital signals (A/D converted), and the digital signals are then output to the analyzer 52.

The CPU 47 arranged in the analyzer 52 monitors the A/D converted yarn thickness unevenness signal and measures the quality of the spun yarn 20. For example, because the thickness of the spun yarn 20 is found to be abnormal at an area where the quality of the spun yarn 20 has a problem, the defect of the spun yarn 20 can be detected by detecting the abnormality in the thickness of the spun yarn 20 by the CPU 47. Since the quality of the spun yarn 20 is measured by the CPU 47, the CPU 47 thus can be referred to as the yarn quality measuring section 68.

The yarn supplying bobbin 21 normally has a yarn spun by a ring spinning machine. Slight thickness unevenness may periodically occur in such a yarn. The cause of the periodic yarn thickness unevenness may include core shift of a draft roller that drafts a sliver in the ring spinning machine. The periodic thickness unevenness in a spinning process causes moire to be generated in a woven cloth in the subsequent weaving process. The CPU 47 serving as the yarn quality measuring section 68 performs a Fast Fourier Transform (FFT) calculation of the yarn thickness unevenness signal to detect the periodic thickness unevenness of the spun yarn 20. In order to accurately perform the FFT calculation, the number of waveform data per unit length of the spun yarn 20 is required to be accurately made constant when sampling the yarn thickness unevenness signal in the A/D converter.

The CPU 47 of the present embodiment acquires information relating to a travelling state of the spun yarn 20, and changes a sampling period (cycle) of the second A/D converter 46 according to the travelling state. Specifically, the CPU 47 generates a pulse signal each time the spun yarn 20 travels a specific length (e.g., 1 mm), and transmits the pulse signal to the second A/D converter 46. This pulse signal is referred to as a fixed yarn length pulse signal. In accordance with this fixed yarn length pulse signal, the second A/D converter 46 samples the analog signals from the first yarn unevenness detecting sensor 43, and converts the analog signals into digital signals. Accordingly, since the number of data per unit length of the spun yarn 20 can be accurately maintained constant, the FFT calculation can be accurately performed in the CPU 47 and the periodic thickness unevenness can be reliably detected. By accurately maintaining the number of data per unit length of the spun yarn 20 constant, the CPU 47 can accurately perform an evaluation of the length of the thickness unevenness of the spun yarn 20 even with a sporadic yarn defect without periodicity, and a detection accuracy of the analyzer 52 can be improved. Since a fixed yarn length pulse signal is information relating to the travelling state of the yarn 20, the fixed yarn length pulse signal can be referred to as one type of yarn travelling information. As described above, since the CPU 47 acquires the yarn travelling information, the CPU 47 may be referred to be functioning as the travelling information acquiring section 67.

Next, the configuration of acquiring the fixed yarn length pulse signal will be described.

The clearer 15 of the present embodiment includes the first A/D converter 45 apart from the second A/D converter 46.

The first A/D converter 45 is an A/D converter which performs sampling of the yarn thickness unevenness signal in order to acquire the fixed yarn length pulse signal by the CPU 47. Specifically, the first A/D converter 45 samples the analog signals from the two yarn unevenness detecting sensors 43 and 44, and converts the analog signals to digital signals. The obtained digital signals are input into the analyzer 52. The CPU 47 arranged in the analyzer 52 functions as the similarity degree evaluating section 65, the weighting processing section 66, and/or the travelling information acquiring section 67, and the like to detect a travelling speed of the spun yarn 20 using the input digital signals. Since the travelling speed of the spun yarn 20 is also information relating to the travelling state of the spun yarn 20, the travelling speed can be referred to as one type of yarn travelling information. The CPU 47 may be referred to be functioning as the travelling information acquiring section 67.

If the travelling speed of the spun yarn 20 is obtained, the travelled length of the spun yarn 20 within a prescribed period of time can be detected in accordance with the travelling speed. The CPU 47 generates and acquires the fixed yarn length pulse signal in accordance with the travelling speed of the spun yarn 20, and transmits the fixed yarn length pulse signal to the second A/D converter 46. The yarn thickness unevenness signal thus can be sampled for every fixed yarn length of the spun yarn 20 in the second A/D converter 46.

Next, a method of acquiring the travelling speed (yarn travelling information) of the spun yarn 20 by the clearer 15 will be described in detail.

First, in the first A/D converter 45, the analog waveforms output from the yarn unevenness detecting sensors 43 and 44 are sampled. A sampling frequency fs1 at this time is changed as needed in proportion to a rotation speed of the winding drum 24. When the signal waveforms of the yarn unevenness detecting sensors 43 and 44 are sampled by the first A/D converter 45, the number of data acquired per unit length of the spun yarn 20 thus can be maintained substantially constant. A calculation load of the CPU 47 thus can be reduced compared with when the sampling frequency is fixed.

As described above, the rotation sensor 42 outputs the rotation pulse signal every time the winding drum 24 rotates a prescribed angle. Therefore, the number of rotation pulse signals output per unit time is proportional to the rotation speed of the winding drum 24. The CPU 47 of the analyzer 52 acquires the rotational information of the winding drum 24 in accordance with the rotation pulse signal received from the rotation sensor 42. The rotational information of the winding drum 24 is information relating to the rotation speed of the winding drum 24, and may be, for example, a peripheral speed of the winding drum 24, an angular speed of the winding drum 24, or the number of rotation pulse signals output per unit time. That is, the information relating to the rotation speed of the winding drum 24 just needs to be acquired in some form in accordance with the rotation pulse signal.

The CPU 47 obtains a sampling speed, which becomes a reference of the travelling speed of the spun yarn 20, by multiplying a prescribed coefficient to the rotational information of the winding drum 24 obtained in the above manner. The CPU 47 obtains the sampling frequency fs1 in accordance with the obtained sampling speed, and sets the obtained sampling frequency fs1 to the first A/D converter 45. The sampling frequency is set such that sampling is performed once each time the spun yarn 20 travels a unit length. The sampling frequency fs1 of the first A/D converter 45 may be changed as needed in proportion to the rotation speed of the winding drum 24. Since the CPU 47 calculates the sampling speed in accordance with the rotational information of the winding drum, the CPU 47 can be referred to be functioning as the sampling speed acquiring section 72.

The analyzer 52 has a storage range configured as a ring buffer (downstream ring buffer 55 and upstream ring buffer 56) on the RAM 48 to temporarily carry the waveform data input from the first A/D converter 45. Specifically, data obtained by sampling the output signal (first yarn thickness unevenness signal) from the first yarn unevenness detecting sensor 43 is accumulated in the downstream ring buffer 55. The data obtained by sampling the output signal (second yarn thickness unevenness signal) from the second yarn unevenness detecting sensor 44 is accumulated in the upstream ring buffer 56. Although the size of the downstream ring buffer 55 and the upstream ring buffer 56 is not particularly limited, the downstream ring buffer 55 and the upstream ring buffer 56 can respectively carry 128 data sets in the present embodiment.

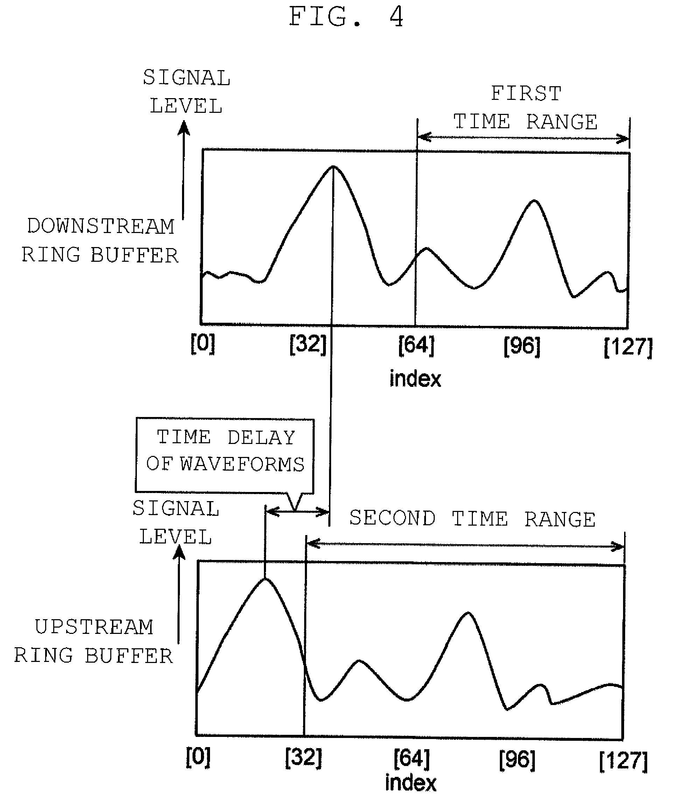

FIG. 4 is a graph illustrating data series (waveform data series) accumulated in the ring buffers 55 and 56. In the graph of FIG. 4, a vertical axis represents a signal level indicated by the waveform data, and a horizontal axis represents an index of the ring buffer in which the waveform data is stored. Regarding the index of the horizontal axis of FIG. 4, a smaller value is assigned to older data in the ring buffer. In other words, the index in which the oldest data is stored in the ring buffer is index [0], and the index in which the most recent data is stored is index [127]. Therefore, the horizontal axis of FIG. 4 may also be considered as a time axis.

If the tension applied on the spun yarn 20 is constant, stretching of the spun yarn 20 at the measurement positions of the first yarn unevenness detecting sensor 43 and the second yarn unevenness detecting sensor 44 is to be the same, and thus the same waveform is assumed to be observed in the two yarn unevenness detecting sensors 43 and 44. Since the first yarn unevenness detecting sensor 43 is arranged downstream of the second yarn unevenness detecting sensor 44 in the yarn travelling direction, the waveform of the signal output from the first yarn unevenness detecting sensor 43 (first yarn thickness unevenness signal) has a time delay with respect to the waveform of the signal output from the second yarn unevenness detecting sensor 44 (second yarn thickness unevenness signal). This delay causes the waveform data series stored in the upstream ring buffer 56 to shift by $\Delta T$ in a past direction (left direction of FIG. 4) on the time axis compared to the waveform data series stored in the downstream ring buffer 55. Provided that the time delay (shift) is $\Delta T$, and a distance between the detection positions of the two yarn unevenness detecting sensors 43 and 44 is L, a yarn speed V can be obtained by the following equation $V = L/\Delta T$ (1). Therefore, the analyzer 52 can calculate the travelling speed of the spun yarn 20 by detecting the time delay (shift) $\Delta T$ of the waveform of the first yarn thickness unevenness signal with respect to the waveform of the second yarn thickness unevenness signal.

In the present embodiment, the CPU 47 compares the waveform of the first yarn thickness unevenness signal (waveform data series accumulated in the downstream ring buffer 55) and the waveform of the second yarn thickness unevenness signal (waveform data series accumulated in the upstream ring buffer 56) to obtain the time delay $\Delta T$. Since a certain duration of time is assumed when the "waveform" is referred, only the single waveform data sampled at a certain instant cannot be referred to as the "waveform". When referring to comparing the waveforms of the signals, the data series continuously acquired within a certain time range are compared as the specific processing.

The CPU 47 compares the waveform data series (first waveform data series) continuously acquired within a first time range of the downstream waveform data accumulated in the downstream ring buffer 55, and the waveform data series (second waveform data series) continuously acquired within a second time range of the waveform data accumulated in the upstream ring buffer 56.

As illustrated in FIG. 4, the first time range is a range from index [64] to index [127] of the ring buffer in the present embodiment. Therefore, the first waveform data series is configured by waveform data of most recent 64 points among the waveform data accumulated in the downstream ring buffer 55. The second time range is a range from index [32] to index [127] of the ring buffer. Therefore, the second waveform data series is configured by waveform data of most recent 96 points among the waveform data accumulated in the upstream ring buffer 56.

Next, the comparison of the waveforms carried out by the CPU 47 will be specifically described. The CPU 47 compares the first waveform data series and the second waveform data series to obtain a similarity degree of the waveform of the first yarn thickness unevenness signal and the waveform of the second yarn thickness unevenness signal. The similarity degree is an indication indicating to what extent the two waveforms overlap (to what extent the two waveforms are similar).

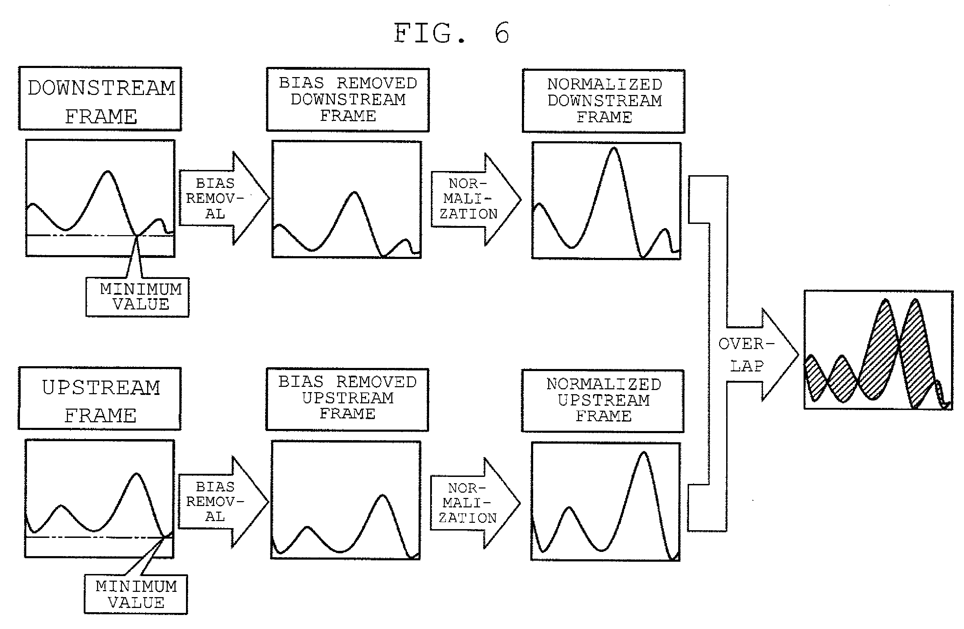

Various methods can be considered as a method of calculating the similarity degree. In the present embodiment, the similarity degree is calculated in the following manner. The two waveforms to be compared are overlapped to acquire an area between the two waveform graphs (portion hatched with diagonal lines in FIG. 6). If the two waveforms are completely different, the two waveforms do not overlap at all and the area becomes 2. If the two waveforms completely coincide, the area becomes 0. With the above area, the similarity degree can be calculated by the following equation (2). Similarity degree=1-(area between two waveforms)÷2 (2)

According to the definition of similarity degree, the two waveforms are more different as the similarity degree is closer to 0, and the two waveforms are more similar as the similarity degree is closer to 1.

Since the second waveform data series is configured by waveform data of 96 points and the first waveform data series is configured by waveform data of 64 points, the range of the second waveform data series is set wider than the range of the first waveform data series. In other words, the second time range is set longer than the first time range in the present embodiment. In order to calculate the similarity degree, the lengths on the time axis of the two waveforms (lengths of waveform data series) to be compared is required to be equal. Thus, when comparing the first waveform data series and the second waveform data series, the CPU 47 extracts the waveform data series having the same length as the first wavelength data series from the second waveform data series, and obtains the similarity degree of the extracted waveform data series and the first waveform data series.

This will be more specifically described below. The CPU 47 prepares an imaginary frame (downstream frame and upstream frame) obtained by imaginarily retrieving the waveform data series acquired within a prescribed time range from the waveform data of the ring buffers 55 and 56. The CPU 47 evaluates the overlapping (similarity degree) of the waveform data of the downstream frame (first imaginary frame) and the waveform data of the upstream frame (second imaginary frame).

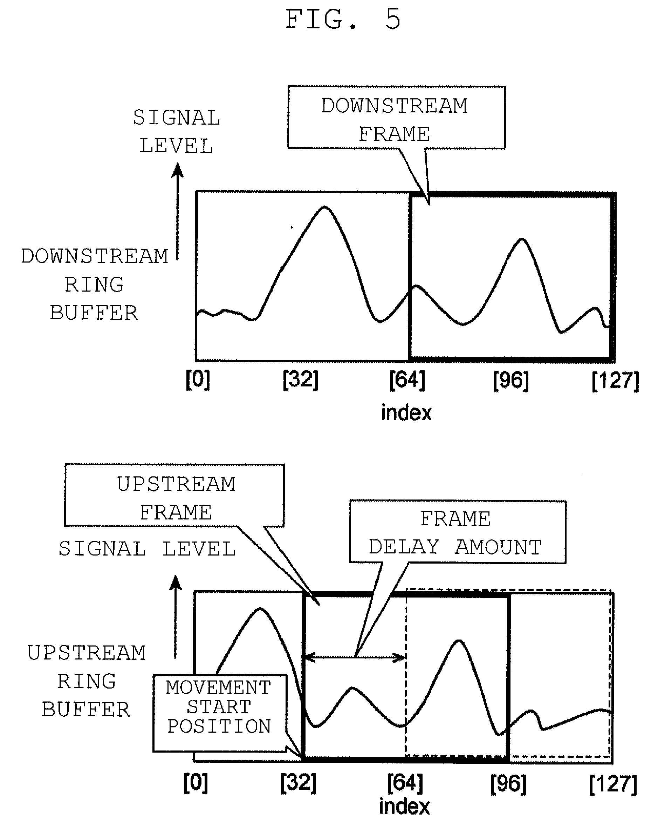

The downstream frame (first imaginary frame) is an imaginary frame for imaginarily retrieving the waveform data series (first waveform data series) continuously acquired in the first time range from the waveform data accumulated in the downstream ring buffer 55. Specifically, as illustrated in FIG. 5, the downstream frame is set to include data of most recent 64 points (waveform data in a range from index [64] to index [127] of downstream ring buffer) among the waveform data stored in the downstream ring buffer 55. In the following description, the index of the oldest data of the waveform data included in the imaginary frame is expressed as a head position of the imaginary frame. In the case of the downstream frame, the head position is index [64].

The upstream frame (second imaginary frame) is an imaginary frame for imaginarily retrieving the waveform data series (waveform data of 64 points) in the time range of the same length as the first time range from the waveform data series (second waveform data series) of the upstream ring buffer 56 acquired in the second time range. The upstream frame is set to store data of 64 continuous points among the waveform data of the range from index [32] to index [127] (second time range) of the upstream ring buffer 56.

The range of the second waveform data series is wider than the first waveform data series by the waveform data of 32 points towards the past direction on the time axis. The head position of the upstream frame thus can be set to a position shifted within 32 points in the past direction than the head position of the downstream frame. The difference in index between the head position of the downstream frame and the head position of the upstream frame is referred to as "frame delay amount" or simply "delay amount".

After the upstream frame is set as described above, the CPU 47 extracts the waveform data in accordance with the extracting condition from the waveform data of 64 points in the set upstream frame, and creates a new upstream frame in accordance with the extracted waveform data. This reduces the number of waveform data included in the upstream frame. The extracting condition includes extracting every other waveform data included in the upstream frame, extracting every two waveform data, and the like, for example. Similarly, the CPU 47 extracts the waveform data in accordance with the extracting condition from the waveform data of 64 points in the set downstream frame, and creates a new downstream frame in accordance with the extracted waveform data. For example, the extracting condition is changed when the yarn travelling speed (sampling speed) exceeds a prescribed yarn travelling speed (prescribed sampling speed). Since the processing time relating to the acquisition of the yarn travelling information is substantially constant, the number of points to be sampled per time in which the yarn travelling information is being acquired increases when the sampling speed becomes fast. In this case, the ratio at which the yarn travelling information is acquired with respect to the number of points to be sampled lowers. Therefore, the extracting condition is set as follows. If the prescribed sampling speed is smaller than a first threshold value, reduction is not performed. If the prescribed sampling speed is greater than or equal to the first threshold value, reduction is performed for every other waveform data. If the prescribed sampling speed is greater than or equal to a second threshold value, reduction is performed for every two waveform data.

After the upstream frame and the downstream frame in which the number of waveform data is reduced are set, the CPU 47 obtains the similarity degree, which is the indication on what extent the waveform included in the upstream frame and the waveform included in the downstream frame are overlapping. The output signals of the yarn unevenness detecting sensors 43 and 44 contain bias components. Therefore, the two waveforms may not overlap satisfactorily with the output signals as is due to variation in the sensitivity of the yarn unevenness detecting sensors 43 and 44. The CPU 47 thus performs processing of bias component removal and normalization on the waveform data of the upstream frame and the downstream frame. As illustrated in FIG. 6, the bias component removal is a processing of searching for a minimum value of the data in the calculation frame and subtracting the minimum value from the value of each data. Normalization is a processing of dividing the value of each data with a total value of data in the calculation frame. The area of the graph of the waveform in the calculation frame is thereby normalized to 1. Since the bias component removal and the normalization of the waveform are carried out on the upstream waveform data and the downstream waveform data respectively, variation in bias component for each of the yarn unevenness detecting sensors 43 and 44, as well as the difference in sensitivity of each of the yarn unevenness detecting sensors 43 and 44 can be absorbed.

After the processing of bias component removal and normalization are performed, the CPU 47 executes a similarity degree evaluation processing for obtaining the similarity degree between the data series of the downstream frame (waveform of first yarn thickness unevenness signal) and the data series of the upstream frame (waveform of second yarn thickness unevenness signal). Since the CPU 47 evaluates the similarity degree of the two waveforms, the CPU 47 may be referred to be functioning as the similarity degree evaluating section 65.

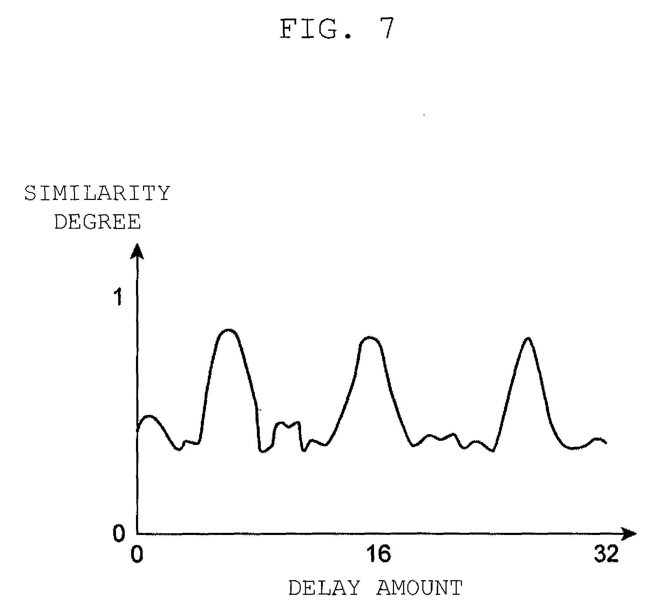

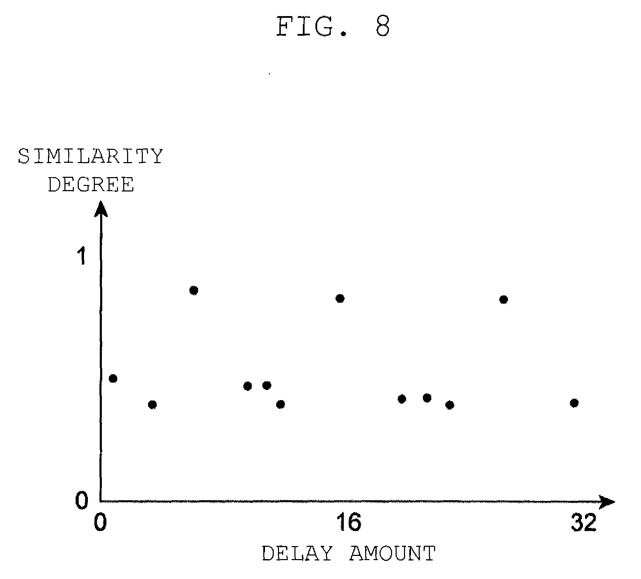

The head position of the upstream frame thus can be set to a position shifted within 32 points in the past direction than the head position of the downstream frame. The frame delay amount (prescribed delay amount) can be changed in the range from 0 to 32. The similarity degree evaluating section 65 repeatedly executes the similarity degree evaluation processing while changing the frame delay amount within the above range. The similarity degree evaluating section 65 selects a plurality of positions on the time axis of the upstream frame in the second time range, and evaluates the similarity degree with respect to each of the plurality of positions. The similarity degree evaluating section 65 thereby acquires a plurality of similarity degrees. Thus, by setting the second time range to be longer than the first time range, the similarity degree evaluation can be carried out for a plurality of times while moving the upstream frame within the second time range. The CPU 47 can therefore acquire a plurality of similarity degrees. As a result of acquiring a plurality of similarity degrees corresponding to the frame delay amount, the CPU 47 can obtain a relationship between the frame delay amount and the similarity degree, as illustrated in FIG. 7, for example. The CPU 47 extracts only the maximum point (similarity degree maximum point) at which the similarly degree becomes maximum from the obtained relationship between the frame delay amount and the similarity degree, and obtains a relationship between the frame delay amount and the similarity degree at each extracted maximum point as illustrated in FIG. 8. The processing of extracting only the maximum point is performed to suppress error from occurring when weighting is performed on the similarity degree. The details of weighting will be described in detail later. The maximum point is where only the maximum portion of the similarity degree is extracted and represents the similarity degree.

The effects of obtaining the similarity degree by reducing the waveform data in the upstream frame and the downstream frame will be described. The resolution of the travelling speed of the spun yarn 20 to be calculated becomes higher by sampling the output signals from the yarn unevenness detecting sensors 43 and 44 at a fixed yarn length according to the sampling frequency obtained based on the rotational information of the winding drum 24. For example, assuming that the distance between the yarn unevenness detecting sensors 43 and 44 is 10 mm and the sampling is performed every time the spun yarn 20 moves 1 mm based on the sampling speed, the resolution becomes 1/10 times the sampling speed like 5/10, 6/10, 7/10, 8/10, ... At this time, if the range to obtain the similarity degree is 20 mm (worth 20 indices), the evaluation processing of the similarity degree is carried out with respect to the waveform data of 20 points. If the sampling is performed every time the spun yarn 20 moves 0.5 mm, the resolution becomes 1/20 times the sampling speed, but the evaluation processing of the similarity degree needs to be performed with respect to the waveform data of 40 points. Therefore, the resolution and the processing time are in a trade-off relationship. The processing time for the similarity degree evaluation can be shortened by reducing the waveform data in the upstream frame and the downstream frame while enhancing the resolution of the travelling speed of the spun yarn 20 by shortening the sampling interval as in the present embodiment.

When the similarity degree becomes maximum, the waveform of the upstream frame and the waveform of the downstream frame are most satisfactorily overlapped. In other words, the time delay $\Delta T$ has been resolved between the waveform data series of the upstream ring buffer 56 and the waveform data series of the downstream ring buffer 55. Therefore, the frame delay amount when the similarity degree becomes maximum is assumed to correspond to the time delay $\Delta T$ of the waveform of the upstream ring buffer 56 and the waveform of the downstream ring buffer 55. In other words, the time delay $\Delta T$ of the waveforms can be calculated based on the frame delay amount when the similarity degree becomes maximum. The calculation of the delay $\Delta T$ will be specifically described later.

The clearer 15 can calculate the travelling speed of the spun yarn 20 by substituting obtained $\Delta T$ in the equation (1). In this manner, the clearer 15 can obtain the travelling speed of the spun yarn 20 in accordance with the similarity degree of two waveforms. However, the clearer 15 of the present embodiment does not calculate the travelling speed of the spun yarn 20 using the similarity degree as described above, and calculates the travelling speed of the spun yarn 20 using the weighted similarity degree, as hereinafter described.

In the present embodiment, a plurality of similarity degrees are obtained by moving the upstream frame on the time axis as described above, but instead, the downstream frame may be moved on the time axis. However, if the upstream frame is moved on the time axis as in the present embodiment, the downstream frame can have the position on the time axis fixed so as to include the most recent waveform data among the waveform data included in the downstream ring buffer 55 (in FIG. 5, downstream frame can be fixed at a rightmost position). The clearer 15 thus can calculate the time delay $\Delta T$ using the most recent yarn thickness unevenness signal on the downstream side, and can obtain the travelling speed of the spun yarn 20 in real time.

Since a similar state may continue in the thickness unevenness of the travelling spun yarn 20, a similar waveform may also continue in the signals output from the yarn unevenness detecting sensors 43 and 44. In this case, since the upstream waveform and the downstream waveform overlap at a plurality of positions, as illustrated in FIG. 7, a plurality of frame delay amounts indicating a peak (maximum point) having a large similarity degree exist within the movement range of the upstream frame. If a plurality of peaks having a large similarity degree exist within the movement range of the upstream frame, the frame delay amount of which peak is to be used for the calculation of the time delay $\Delta T$ of the waveforms becomes confusing and the yarn travelling speed may be calculated using a wrong frame delay amount.

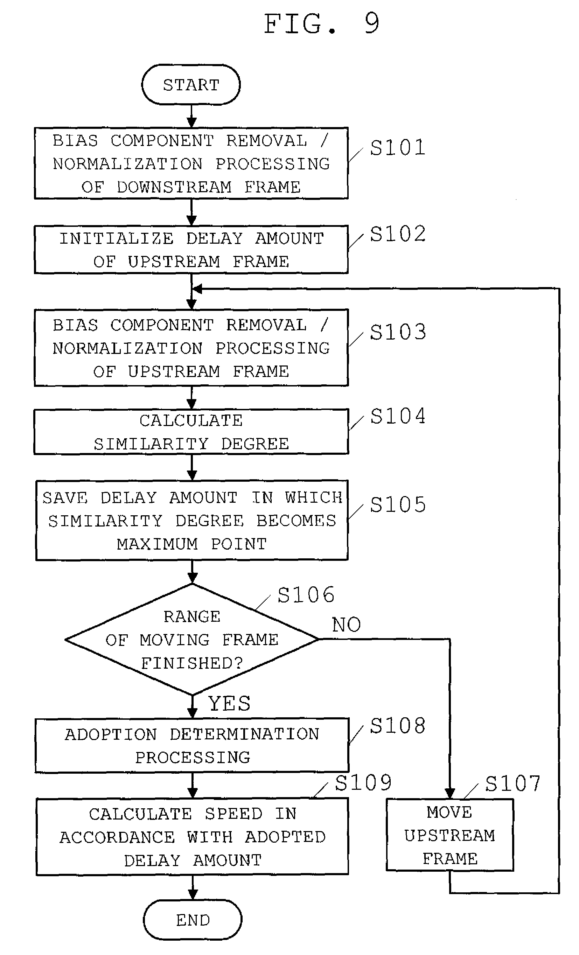

Therefore, in the present embodiment, weighting is performed on the similarity degree to resolve the confusion of the peaks of the similarity degree. The yarn travelling speed acquiring processing executed by the CPU 47 in the present embodiment will be described below with reference to FIG. 9.

The CPU 47 executes the yarn travelling speed acquiring processing illustrated in the flowchart of FIG. 9 every time new data is sampled in the first A/D converter 45 and the new waveform data is added to the ring buffers 55 and 56. When the yarn travelling speed acquiring processing starts, the CPU 47 reduces the waveform data in the downstream frame, and performs bias component removal and normalization of the waveform (step S101).

The CPU 47 then performs initialization of the frame delay amount (initialization of the position of the upstream frame) (step S102). In the present embodiment, the frame delay amount is initialized to 32. The upstream frame is thus set to a position shifted to the past corresponding to the waveform data of 32 points from the downstream frame. Therefore, the upstream frame includes the waveform data in the range from index [32] to index [95] of the upstream ring buffer 56 (see FIG. 5).

After the position of the upstream frame is determined, the CPU 47 reduces the waveform in the upstream frame, and performs the bias component removal and the normalization of the waveform as described above (step S103).

Next, the CPU 47 performs the similarity degree evaluation processing for obtaining the similarity degree on the waveform data in the upstream frame and the waveform data in the downstream frame (step S104). After the similarity degree is calculated, the CPU 47 saves the frame delay amount (see FIG. 8) of each maximum point of the similarity degrees (step S105).

The CPU 47 then determines whether or not the movement range of the upstream frame is finished (step S106). In the present embodiment, the upstream frame is moved in the range in which the frame delay amount is from 32 to 0 (i.e., range in which the upstream frame fits within the second time range). If the movement range is not finished (step S106: NO), the frame delay amount is reduced by one in step S107 (upstream frame is shifted by one toward right in FIG. 5), and the process returns to step S103. If the movement range is finished (step S106: YES), the process proceeds to step S108.

According to the above loop processing, the steps S103 to S107 are repeatedly carried out while shifting the position on the time axis of the upstream frame. Accordingly, since the similarity degree evaluation processing and the weighting processing are performed for a plurality of times in the movement range of the upstream frame (range in which the frame delay amount is from 0 to 32), the CPU 47 can acquire a plurality of similarity degrees. The data stored in step S105 is reset every time a new yarn travelling speed acquiring processing is started.

The CPU 47 then performs an adoption determination processing (step S108) of determining a maximum point that is adopted to calculate the time delay $\Delta T$ of the waveform data of the upstream ring buffer 56 and the waveform data of the downstream ring buffer 55 for a plurality of obtained maximum points.

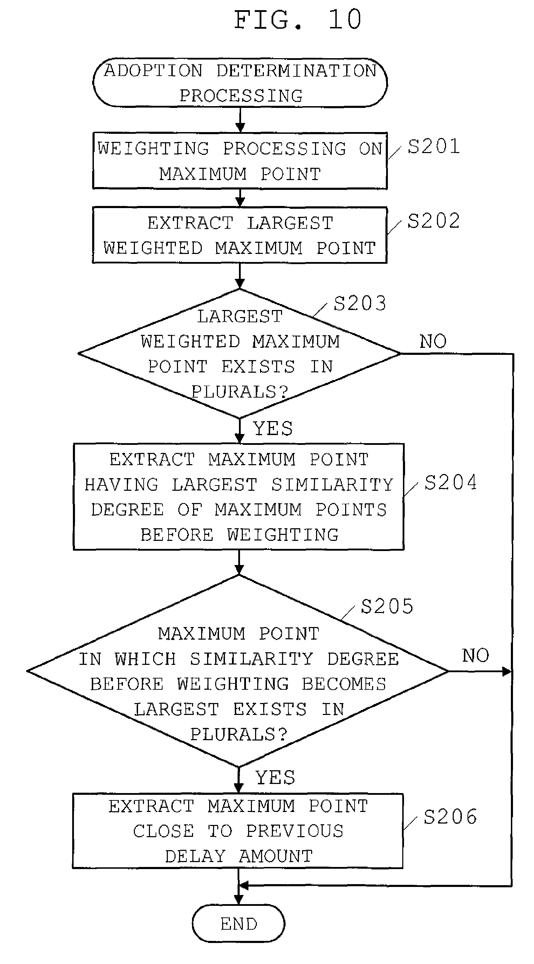

The contents of the adoption determination processing will be specifically described below with reference to the flowchart of FIG. 10. After starting the adoption determination processing, the CPU 47 performs the weighting processing on each maximum point shown in FIG. 8, and performs the weighting processing for calculating the weighted maximum point (step S201). Since the weighting processing is carried out in this manner, the CPU 47 may be referred to be functioning as the weighting processing section 66. In the following description, the maximum point before the weighting is sometimes referred to as "raw maximum point", in particular if there is a need to be distinguished from the weighted maximum point. The above weighting processing is performed by multiplying a weighting factor to the value of the raw maximum point. In other words, assuming that the raw maximum point is Sc_index when the frame delay amount is c_index, and the weighting factor with respect to the frame delay amount c_index is Wc_index, the weighted maximum point S'c_index can be obtained with the following equation (3).

$$S'c\_index = Sc\_index \times Wc\_index \quad (3)$$

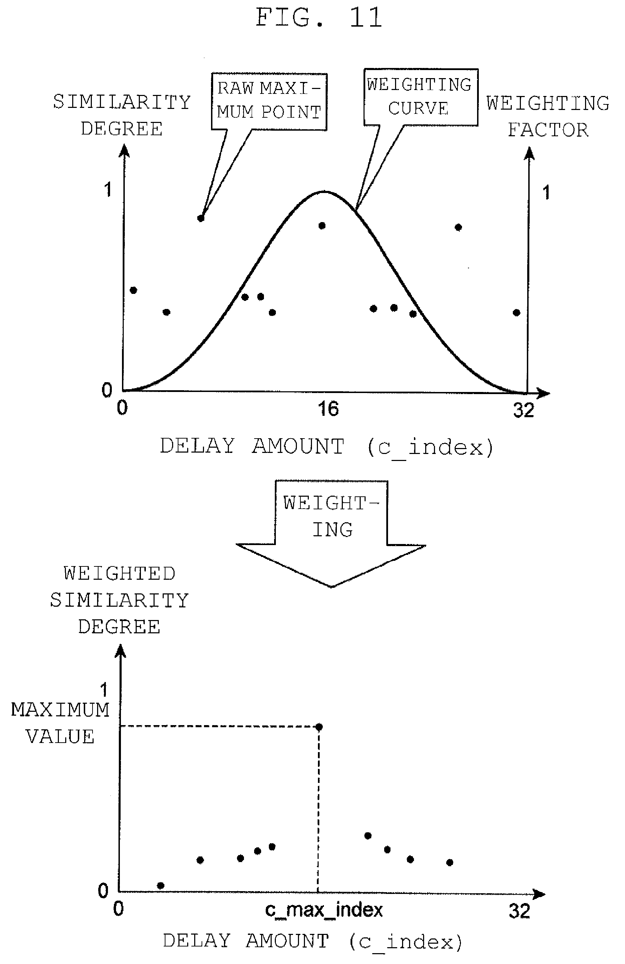

The value of the weighting factor Wc_index for a certain frame delay amount c_index is determined by a weighting curve that specifies the relationship between the frame delay amount and the weighting factor. An example of the weighting curve is illustrated in an upper graph of FIG. 11. As illustrated in FIG. 11, the weighting curve is set so that the weighting factor has one maximum value that becomes a peak at the position of a prescribed frame delay amount c_index, and the value of the weighting factor is set so as to gradually decrease as the weighting curve becomes distant from the peak. Therefore, by performing the weighting on the maximum point using the weighting factor specified with the weighting curve, the maximum point near the peak of the weighting curve is emphasized and the other maximum points are suppressed. As a result, the emphasis (similarity degree) of the unnecessary maximum points among the plurality of maximum points can be suppressed, as shown in the lower graph of FIG. 11.

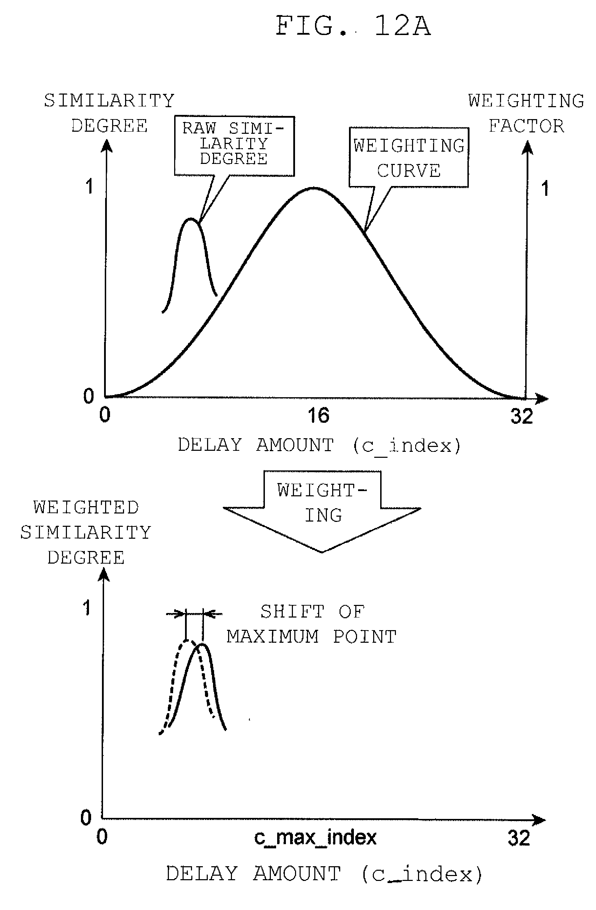

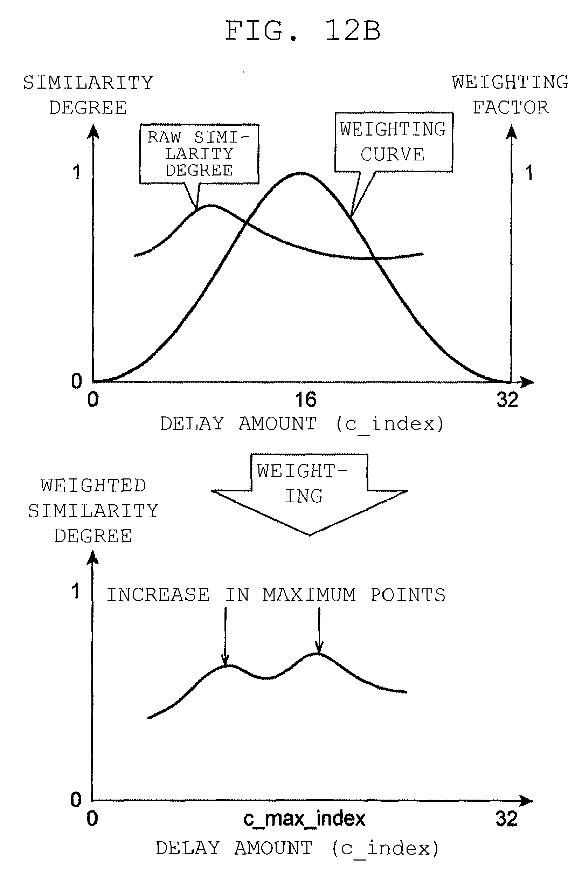

The effects of performing the weighting processing on the maximum point will be described. For example, when performing weighting using the weighting curve with respect to the raw similarity degree, which is not subjected to weighting, as shown in the upper graph of FIG. 12A, the maximum point of the weighted similarity degree, which is the similarity degree after the weighting, may shift from the position (frame delay amount) of the maximum point of the raw similarity degree, as shown in the lower graph of FIG. 12A. For example, when performing weighting using the weighting curve with respect to the raw similarity degree, which is not subjected to weighting, as shown in the upper graph of FIG. 12B, the number of maximum points of the weighted similarity degree may increase, as shown in the lower graph of FIG. 12B.

As illustrated in FIG. 11, occurrence of shift in the position of the maximum point and/or increase in the number of maximum points can be suppressed by performing weighting with respect to the maximum point in the present embodiment. Therefore, the weighting processing can be more accurately performed in the present embodiment.

In the present embodiment, a history weighting curve and a sampling speed weighting curve are used as the weighting curve. In step S201, the CPU 47 performs the processing of weighting the maximum point using the history weighting curve and the processing of weighting the maximum point using the sampling speed weighting curve.

The history weighting curve is set so that the weighting factor becomes large in proximity to the frame delay amount (reference delay amount) of when the weighted maximum point became maximum in the previous yarn travelling speed acquiring processing. Since the yarn travelling speed continuously changes, the yarn travelling speed (calculated delay amount) acquired in the current yarn travelling speed acquiring processing is assumed to be not significantly different from the yarn travelling speed (reference delay amount) acquired in the previous yarn travelling speed acquiring processing. Therefore, the frame delay amount (calculated delay amount) of when the maximum point becomes maximum in the current yarn travelling speed acquiring processing has a high probability of being proximate to the frame delay amount (reference delay amount) when the maximum point became maximum in the previous yarn travelling speed acquiring processing. In other words, the raw maximum point that appears at the position away from the frame delay amount when the maximum point became maximum in the previous yarn travelling speed acquiring processing has a high possibility of being a false maximum point that does not correspond to the yarn travelling speed. Thus, the weighting factor is preferably reduced to lower degree of importance with respect to the raw maximum point at the position away from the frame delay amount when the maximum point became maximum in the previous yarn travelling speed acquiring processing. The history weighting curve will be described in detail later.

The sampling speed weighting curve is set such that the weighting factor becomes large in proximity to the frame delay amount corresponding to the sampling speed calculated in accordance with the rotational information of the winding drum 24. In other words, the yarn travelling speed changes around the sampling speed, and is assumed to not significantly differ from the sampling speed. Therefore, the time delay $\Delta T$ of the waveform data of the upstream ring buffer 56 with respect to the waveform data of the downstream ring buffer 55 is assumed to change in proximity to a frame delay corresponding to the sampling speed. In other words, the raw maximum point that appears at the position away from the frame delay amount corresponding to the sampling speed has a high possibility of being a false maximum point that does not correspond to the yarn travelling speed. Thus, the weighting factor is preferably reduced to lower degree of importance with respect to the raw maximum point at the position away from the frame delay amount corresponding to the sampling speed. The sampling speed weighting curve will be described in detail later.

Returning back to FIG. 10, the CPU 47 calculates a plurality of weighted maximum points using the history weighting curve and the sampling speed weighting curve, and then extracts the weighted maximum point having the largest similarity degree (similarity degree after weighting) (step S202). The CPU 47 determines whether or not a plurality of weighted maximum points having the largest similarity degree is extracted (step S203). If only one weighted maximum point having the largest similarity degree is extracted (step S203: NO), the CPU 47 adopts the maximum point extracted in step S202 as the naximum point (target weighted similarity degree) for calculating the time delay ΔT of the waveform data.

If a plurality of weighted maximum points having the Largest similarity degree are extracted (step S203: YES), the CPU 47 compares the similarity degrees before weighting for the extracted weighted maximum points. The CPU 47 extracts the weighted maximum point having the largest similarity degree before weighting as a result of the comparison (step S204). The CPU 47 determines whether or not a plurality of maximum points having the largest similarity degree before weighting is extracted (step S205). If only one weighted maximum point having the largest similarity degree before weighting is extracted (step S205: NO), the CPU 47 adopts the maximum point extracted in step S204 as the maximum point (target weighted similarity degree) for calculating the time delay ΔT of the waveform data.

If a plurality of weighted maximum points having the largest similarity degree before weighting are extracted (step S205: YES), the CPU 47 first extracts the maximum point having a frame delay amount closest to the frame delay amount of when the maximum point becomes maximum in the previous yarn travelling speed acquiring processing among the extracted weighted maximum points. The CPU 47 adopts the extracted weighted maximum point as the maximum point (target weighted similarity degree) for calculating the time delay ΔT of the waveform data (step S206). Since the CPU 47 extracts the maximum point for calculating the delay ΔT from the plurality of weighted maximum points, the CPU 47 may be referred to be functioning as the travelling information acquiring section 67 adapted to extract the maximum point for calculating the delay ΔT.

Next, the processing carried out after the adoption determination processing is terminated will be described. After the execution of the adoption determination processing is terminated, the CPU 47 returns to the flow of FIG. 9 and proceeds to step S109.

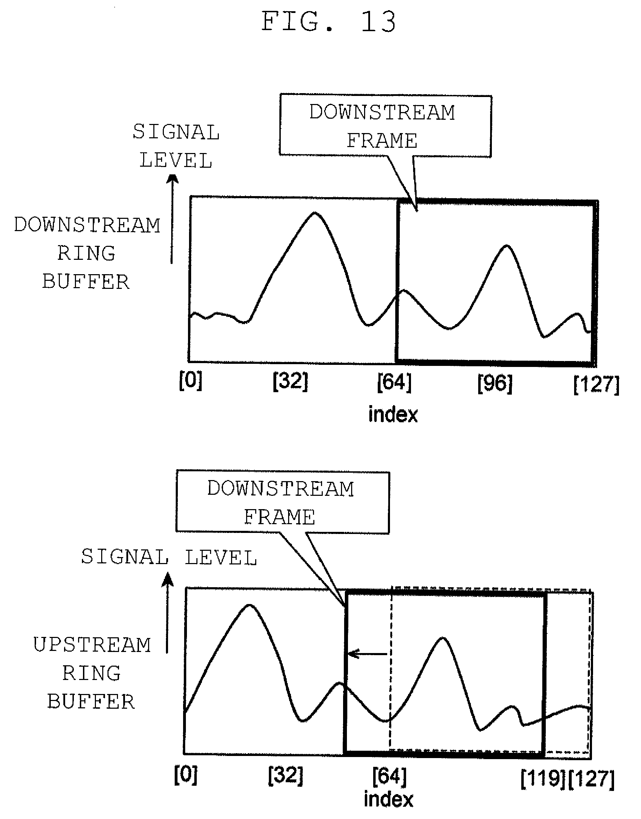

In step S109, the CPU 47 calculates the travelling speed of the spun yarn 20 based on the frame delay amount of the maximum point adopted in the adoption determination processing of step S108. In the following description, the frame delay amount of the maximum point adopted in step S108 is referred to as "currently adopted maximum value correspondence delay amount". The currently adopted maximum value correspondence delay amount is assumed to correspond to the time delay ΔT between the waveform data of the upstream ring buffer 56 and the waveform data of the downstream ring buffer 55. The currently adopted maximum value correspondence delay amount is the frame delay amount until the waveform of the upstream ring buffer 56 and the waveform of the downstream ring buffer 55 match when the downstream frame illustrated in FIG. 13 is moved in the past direction from the most recent position on the time axis of the upstream frame. FIG. 13 illustrates an example of a case in which the waveform data of the upstream ring buffer 56 and the waveform data of the downstream ring buffer 55 match (i.e., case in which the frame delay amount is eight) when the downstream frame is shifted by eight indices from index [127] to index [119].

Therefore, in the example of FIG. 13, the time duration from index [127] to index [119] corresponds to the time delay ΔT of the waveform data of the upstream ring buffer 56 and the waveform data of the downstream ring buffer 55.

The CPU 47 measures the sampling time interval when sampling the yarn thickness unevenness signal for every sampling interval. Since the CPU 47 measures the time interval of sampling, the CPU 47 functions as the measuring section 73. The CPU 47 integrates each sampling time interval from index [127] to index [119]. In other words, the CPU 47 integrates the sampling time interval from index [127] to index [126], the sampling time interval from index [126] to index [125], ... and the sampling time interval from index [120] to index [119] . The integration result becomes the time delay ΔT of the waveforms.

The effects of calculating the time delay ΔT of the waveforms by integrating the sampling time interval will be described. For example, the sampling time interval becomes constant if the travelling speed of the spun yarn 20 is constant, and hence the time delay ΔT of the waveforms is obtained by multiplying the sampling time interval and the frame delay amount (number of indices). If the average travelling speed of the spun yarn 20 is in acceleration, the sampling time interval gradually becomes shorter, and hence the time delay ΔT of the waveforms becomes longer than the time obtained by multiplying the most recent sampling time interval and the frame delay amount (number of indices). If the average travelling speed of the spun yarn 20 is in deceleration, the time delay ΔT of the waveforms becomes shorter. By integrating the sampling time intervals to calculate the time delay ΔT of the waveforms as in the present embodiment, the delay ΔT can be accurately calculated even if the spun yarn 20 is in acceleration or in deceleration.

The CPU 47 calculates the travelling speed of the spun yarn 20 by substituting ΔT obtained as described above to the equation (1) (step S109). By calculating the travelling speed of the spun yarn 20 in accordance with the weighted maximum point, the CPU 47 can accurately calculate the travelling speed of the spun yarn 20 even if the raw maximum point exists in plurals. In the present embodiment, as described above, the adoption determination processing is performed for preventing the maximum point having low reliability from being adopted. The CPU 47 thus can obtain the yarn travelling speed of high reliability.

The CPU 47 changes the sampling period (cycle) of the second A/D converter 46 in accordance with the yarn travelling speed obtained as described above. Specifically, the CPU 47 generates the fixed yarn length pulse signal at a frequency proportional to the yarn travelling speed, and transmits the generated fixed yarn length pulse signal to the secondA/D converter 46. The yarn travelling speed is an accurate yarn travelling speed obtained in accordance with the weighted maximum point. Therefore, by sampling the yarn thickness unevenness signals by the second A/D converter 46 in accordance with the fixed yarn length pulse signal based on the yarn travelling speed, the number of data per unit length of the spun yarn 20 can be accurately made constant.

The yarn travelling speed obtained as described above is transmitted to the unit control section 50. The unit control section 50 transmits the control signal to the motor control section 54 according to the travelling speed of the spun yarn 20 transmitted from the clearer 15, and controls the rotation of the winding drum 24. The winder unit 10 thus can perform the winding of the package 30 according to the accurate travelling speed of the spun yarn 20. The unit control section 50 can calculate a total length of the spun yarn 20 wound into the package 30 by integrating the travelling speed of the spun yarn 20 by time. Therefore, for example, when the winding of the spun yarn 20 of a prescribed length is finished, the winder unit 10 can terminate the winding of the spun yarn 20 and have a fully-wound the package 30. The winder unit 10 thus can make the length of the spun yarn 20 to be wound to the respective package 30 to be uniform, and the packages 30 of uniform length can be produced.

In the above description, although the CPU 47 has been described to calculate the travelling speed of the spun yarn 20, the yarn travelling information is not necessarily acquired in the form of speed. For example, if the spun yarn 20 moved 2 cm in one second and 3 cm in the next second, the CPU 47 merely needs to acquire the information "moved total of 5 cm in two seconds", and may not necessarily need to acquire information in the form of speed such as "2.5 cm per second". The information of "length the spun yarn 20 moved per unit time" is also information relating to the travelling state of the spun yarn 20, and hence is one type of yarn travelling information.

Next, the method of determining the weighting curve will be described. In the present embodiment, the weighting curve includes a history weighting curve and the sampling speed weighting curve.

First, the history weighting curve will be described. The history weighting curve is set so that the weighting factor becomes large in proximity to the frame delay amount at which the weighted maximum point became maximum in the previous yarn travelling speed acquiring processing, as described above. In other words, the maximum point of the history weighting curve is set in accordance with the previously calculated frame delay amount. The history weighting curve becomes a weighting curve corresponding to the speed ratio based on the frame delay amount (prescribed delay amount) of the first yarn thickness unevenness signal and the second yarn thickness unevenness signal.

The weighting curve corresponding to the speed ratio will be hereinafter described using specific examples. Assume that the first A/D converter 45 samples the yarn thickness unevenness signal every time the spun yarn 20 travels 1 mm. In this case, if the travelling speed of the spun yarn 20 calculated in accordance with the rotational information of the winding drum 24 is 1000 mm/sec., the sampling time interval is 1 msec. In this case, assuming the spacing of the first yarn unevenness detecting sensor 43 and the second yarn unevenness detecting sensor 44 is 10 mm and the actual travelling speed of the spun yarn 20 is 1000 mm/sec., the value of the frame delay amount of the maximum point adopted in step S108 of FIG. 9 becomes ten. However, if there is error in the sampling frequency and the like, and the calculated frame delay amount is nine, the actual travelling speed of the spun yarn 20 becomes $1000 \times (10/9)$ mm/sec. Similarly, if the calculated frame delay amount is 11, the actual travelling speed of the spun yarn 20 is 1000 x (10/11) mm/sec. Thus, the speed ratio differs even if the frame delay amount is one. Therefore, the weight corresponding to the speed ratio based on the frame delay amount needs to be determined and not the weight based on the frame delay amount.

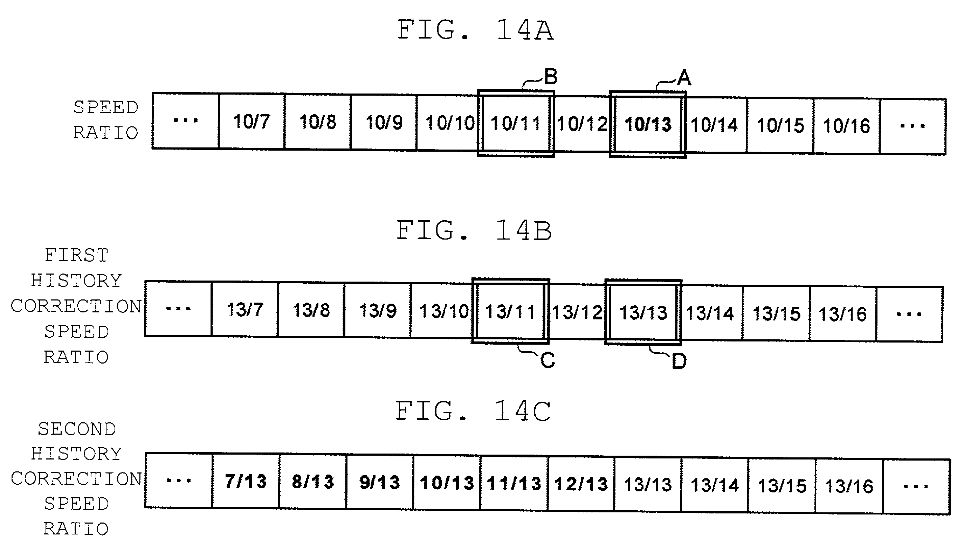

As shown in FIG. 14A, the CPU 47 obtains the speed ratio in accordance with the frame delay amount to be the reference and the calculated frame delay amount. In FIG. 14A, the numerator represents the frame delay amount to be the reference, and the denominator represents the calculated frame delay amount. The frame delay amount to be the reference is the frame delay amount corresponding to the sampling speed, and is ten herein. This speed ratio is obtained by having the frame delay amount ten to be the reference as the numerator and changing the frame delay amount of the denominator by one. As shown in FIG. 14B, the CPU 47 then obtains a first history correction speed ratio that takes into consideration the frame delay amount (reference delay amount) previously calculated with respect to the obtained speed ratio. For example, if the previously calculated frame delay amount is 13, the first history correction speed ratio is calculated using the speed ratio (10/13) in a frame A illustrated in FIG. 14A. Specifically, when obtaining the first history correction speed ratio in the frame C illustrated in FIG. 14B, the CPU 47 divides the speed ratio (10/11) of a frame B by the speed ratio (10/13) of the frame A to calculate the first history correction speed ratio (13/11) in a frame C. Similarly, the first history correction speed ratio in a frame D can be obtained by dividing the speed ratio of the frame A by the speed ratio of the frame A.

As illustrated in FIG. 14C, the CPU 47 then obtains a second history correction speed ratio. The second history correction speed ratio is obtained, such that the first history correction speed ratio (speed ratio 13/13 of frame D) corresponding to the previously calculated frame delay amount takes a largest value, by correcting the first history correction speed ratio exceeding such value. Specifically, the second history correction speed ratio is calculated by interchanging the denominator and the numerator of each value of "13/7", "13/8", ..., "13/12" in which the first history correction speed ratio exceeds 13/13. The first history correction speed ratio that does not exceed 13/13 is used as is as the second history correction speed ratio.

The CPU 47 obtains the history weighting curve using the second history correction speed ratio. Specifically, the history weighting curve is defined with the following equation (4) in which the relationship of a history weighting factor WP that forms the history weighting curve and a second history correction speed ratio N is designated.

$$WP = \exp(-(1-N)^2/W) \quad (4)$$

W is a constant that can be set by the user.

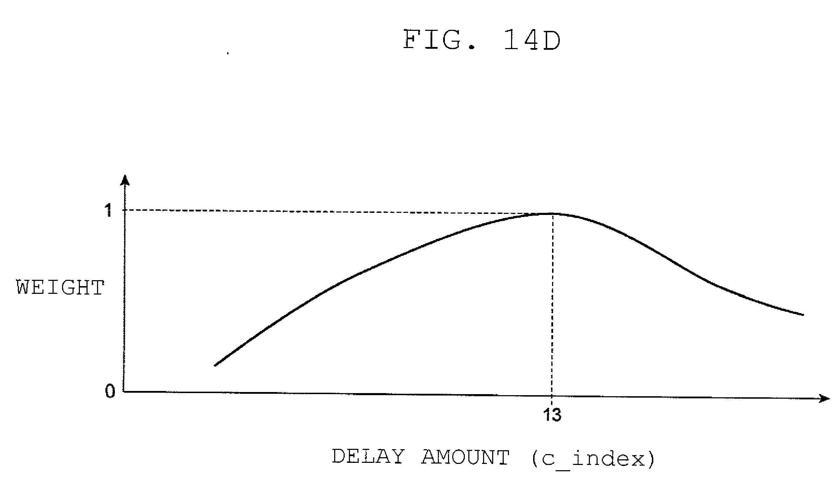

FIG. 14D illustrates an example of the history weighting curve calculated using equation (4). The history weighting curve having the previous frame delay amount 13 as maximum is illustrated.

In the example described above, an example of calculating the history weighting curve when the previously calculated frame delay amount is 13 is described, but the history weighting curve of when the previously calculated frame delay amount takes other values is also calculated in advance. When weighting the maximum point using the history weighting curve, the CPU 47 can select and use the history weighting curve corresponding to the previous frame delay amount.

Next, the sampling speed weighting curve will be described. The sampling speed weighting curve is set such that the weighting factor becomes large in proximity to the frame delay amount corresponding to the sampling speed calculated in accordance with the rotational information of the winding drum 24, as described above. The maximum point of the sampling speed weighting curve is set in accordance with the frame delay amount when the spun yarn 20 travelled under the sampling speed. Similar to the history weighting curve, the weight of the sampling speed weighting curve is not determined based on the frame delay amount, but rather the weight corresponding to the speed ratio based on the frame delay amount needs to be determined in the sampling speed weighting curve. Therefore, the sampling speed weighting curve becomes a weighting curve corresponding to the speed ratio based on the frame delay amount (prescribed delay amount) of the first yarn thickness unevenness signal and the second yarn thickness unevenness signal.

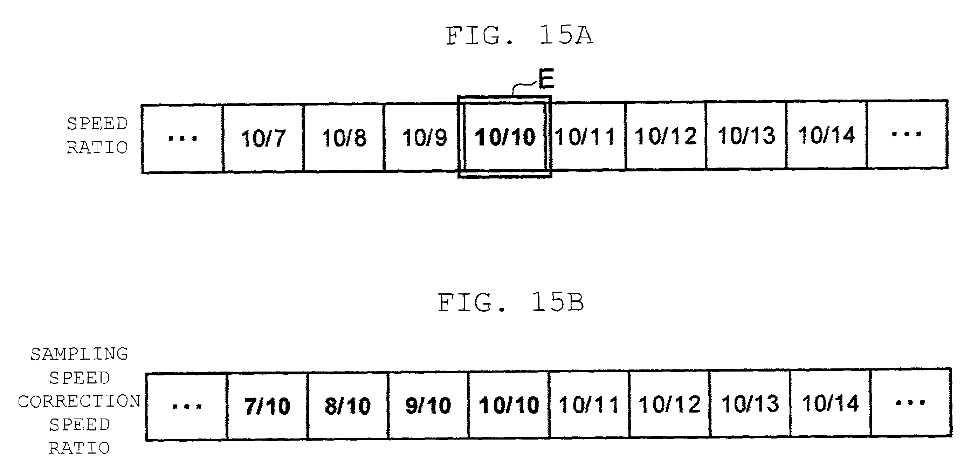

As shown in FIG. 15A, the CPU 47 obtains the speed ratio in accordance with the frame delay amount to be the reference and the calculated frame delay amount. In FIG. 15A, the numerator represents the frame delay amount to be the reference, and the denominator represents the calculated frame delay amount. The frame delay amount to be the reference is the frame delay amount corresponding to the sampling speed, and is ten herein. This speed ratio is obtained by having the frame delay amount ten to be the reference as the numerator and changing the frame delay amount of the denominator by one.

The CPU 47 then obtains the sampling speed correction speed ratio, as illustrated in FIG. 15B. The sampling speed correction speed ratio is obtained, such that the speed ratio (speed ratio 10/10 of frame E) corresponding to the frame delay amount when the spun yarn 20 travelled with the sampling speed assumes the largest value, by correcting the speed ratio exceeding such value. Specifically, the sampling speed correction speed ratio is calculated by interchanging the denominator and the numerator of each value of "10/7", "10/8", and "10/9" in which the speed ratio exceeds 10/10. The correction speed ratio not exceeding 10/10 is used as it is as the sampling speed correction speed ratio.

The CPU 47 uses the sampling speed correction speed ratio to obtain the sampling speed weighting curve. Specifically, the sampling speed weighting curve is defined with the following equation (5) in which a relationship of a sampling speed weighting factor WA that forms the sampling speed weighting curve and a sampling speed correction speed ratio N is designated.

$$WA = \exp(-(1-N)^2/W) \quad (5)$$

W is a constant that can be set by the user.

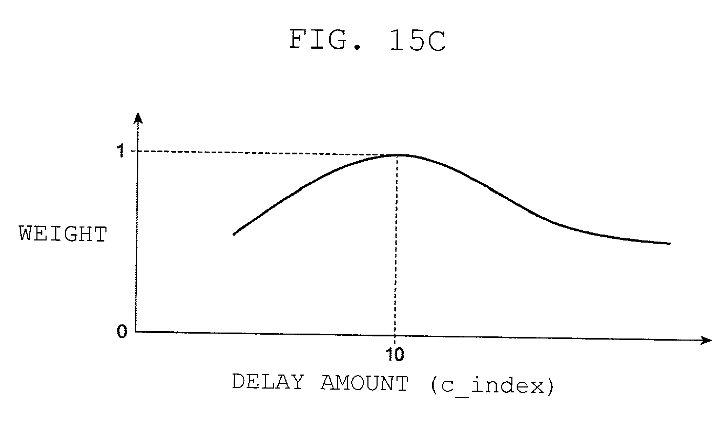

FIG. 15C illustrates an example of a sampling speed weighting curve calculated using equation (5). An example illustrated in FIG. 15C is a sampling speed weighting curve in which the frame delay amount (10) when the spun yarn 20 travelled under the sampling speed is maximum.

The above-described example is an example of calculating the sampling speed weighting curve of the frame delay amount when the spun yarn 20 travelled under the sampling speed is ten. However, since the sampling speed varies, the sampling speed weighting curve is calculated in advance for every sampling speed. When weighting the maximum point using the sampling speed weighting curve, the CPU 47 can select and use the sampling weighting curve of the frame delay amount corresponding to the sampling speed.

The CPU 47 can correct the history weighting factor WP of the history weighting curve and the sampling speed weighting factor WA of the sampling speed weighting curve in accordance with the weighted similarity degree when the weighted maximum point becomes maximum in the previous yarn travelling speed acquiring processing. Specifically, assuming the weighted similarity degree when the weighted maximum point became maximum in the previous yarn travelling speed acquiring processing is SP, the corrected history weighting factor WP' and the corrected sampling speed weighting factor WA' are defined with the following equations (6) and (7).

$$WP' = SP \times WP \quad (6)$$

$$WA' = (2S' - SP)WA \quad (7)$$

S' is a stable similarity factor, and a minimum value of the similarity degree, and the like, for example, can be set.

The correction of the history weighting factor and the sampling speed weighting factor emphasizes the influence of the history weighting factor WP when the similarity degree SP is large and emphasizes the influence of the sampling speed weighting factor when the similarity degree SP is small. This is based on the fact that if the previous similarity degree SP is large, the history weighting curve is assumed to have higher reliability than the sampling speed weighting curve. Therefore, the maximum point of high reliability can be selected by performing the correction. Since the CPU 47 corrects the history weighting factor and the sampling speed weighting factor in accordance with the previous similarity degree, the CPU 47 thus also functions as the travelling information acquiring section 67 for correcting the history weighting factor and the sampling speed weighting factor.

The present embodiment is configured as described above, and the weighting processing section 66 performs the weighting processing on each of a plurality of maximum points using the weighting curve (history weighting curve and sampling speed weighting curve) corresponding to the speed ratio in accordance with the frame delay amount of the first yarn thickness unevenness signal and the second yarn thickness unevenness signal. The weight can be appropriately set for every frame delay amount by using the weighting curve corresponding to the speed ratio based on the frame delay amount. Therefore, by using the weighting curve corresponding to the speed ratio based on the frame delay amount, the weighting processing can be more accurately performed, and the travelling state of the spun yarn 20 can be more accurately acquired.

The weighting curve has one maximum value. The weighting can be appropriately performed on the plurality of maximum points of the similarity degree by using such weighting curve.

The weighting processing section 66 performs the weighting on the maximum point using the history weighting curve that takes into consideration the frame delay amount calculated in the past and the sampling speed weighting curve that takes into consideration the sampling speed. The appropriate target weighted similarity degree that takes into consideration the frame delay amount calculated in the past and the sampling speed thus can be extracted, and more accurate yarn travelling information can be acquired.

The travelling information acquiring section 67 corrects the history weighting curve and the sampling speed weighting curve in accordance with the target weighted similarity degree calculated in the past. The history weighting curve and the sampling speed weighting curve that take into consideration the target weighted similarity degree calculated in the past thus can be obtained, and the weighting can be more appropriately performed. The travelling information acquiring section 67 is adapted to increase a value of the weighting factor designated by the history weighting curve accompanying an increase in the target weighted similarity degree calculated in the past, and to increase a value of the weighting factor designated by the sampling speed weighting curve accompanying a decrease in the target weighted similarity degree calculated in the past. If the target weighted similarity degree calculated in the past is large, it can be assumed that the history weighting curve has higher reliability than the sampling speed weighting curve. By increasing the weighting factor designated by the history weighting curve accompanying an increase in the target weighted similarity degree calculated in the past, the history weighting curve and the sampling speed weighting curve can be appropriately corrected according to the actual situation.

The travelling information acquiring section 67 can more appropriately extract the maximum point for calculating the time delay $\Delta T$ of the waveform data by performing the adoption determination processing even if a plurality of weighted maximum points are obtained.

The similarity degree evaluating section 65 calculates in plurals only the maximum points of the calculated similarity degrees. In this case, the weighting processing is performed only on the maximum point of the similarity degree. Thus, only the value of the similarity degree can be raised and lowered (perform weighting) with respect to the maximum points without changing the position of the delay amount, and the weighting can be more accurately performed.

When calculating the time delay $\Delta T$ of the waveform data, by integrating the sampling time intervals, for example, even if the spun yarn 20 is in acceleration or in deceleration, the time (length of time) of when the spun yarn 20 travelled by the frame delay amount can be more accurately obtained.

Since the winder unit 10 includes the clearer 15 capable of calculating the yarn travelling speed as described above, each section can be controlled using the highly accurate travelling information of the spun yarn 20 acquired by the clearer 15.

One embodiment of the present invention has been described above, but the present invention is not limited to the above embodiment. For example, in the above-described embodiment, the spun yarn 20 is traversed on the surface of the package 30 while the package 30 is rotated by the rotating winding drum 24. However, the configuration of the present invention can be applied even to a yarn winding machine having a configuration in which the driving of the package and the traversing are independent. Such a yarn winding machine includes an automatic winder provided with an arm-type traverse device that traverses the spun yarn 20 with a swinging arm, or a belt-type traverse device that traverses the spun yarn 20 with a yarn hooking member that reciprocates to the left and the right by a belt.

The yarn travelling information acquiring device of the present invention is not limited to the automatic winder, and may be applied to other yarn processing devices such as a fine spinning machine, and the like, for example.

In the above embodiment, the change in the light receiving amount is monitored by the yarn unevenness detecting sensors 43 and 44, but for example, a yarn unevenness detecting sensor of a type that detects the change in electrostatic capacitance of the travelling spun yarn 20 may be adopted. With such a configuration, the change in mass per unit length of the spun yarn 20 can be detected. In other words, the yarn unevenness detecting sensor is sufficient to be configured to detect the thickness unevenness of the spun yarn 20 by some kind of method.

The weighting curve does not need to be in a form of exponential function as described in the embodiment, and merely needs to be able to perform weighting in some form.

In the embodiment described above, the weighting curve (history weighting curve and sampling speed weighting curve) is defined as the exponential function (exp function), but the present invention is not limited thereto, and any function can be used for the definition of the weighting curve as long as the function has one maximum value.

A description has been made that the clearer 15 acquires the yarn travelling information such as the fixed yarn length pulse signal and the yarn travelling speed, but instead, other yarn travelling information may be acquired. For example, the total length of the traveled spun yarn 20 may be obtained by integrating the obtained yarn travelling speed by time in the clearer 15.

In the clearer 15, for example, only the time delay $\Delta T$ of the waveforms may be obtained without calculating the yarn travelling speed. Since the time delay $\Delta T$ of the waveforms generates when the spun yarn 20 travels, the time delay $\Delta T$ can be referred to as the travelling information of the spun yarn 20. In this case, the time delay $\Delta T$ of the waveforms obtained by the clearer 15 is output to the unit control section 50, and calculation of the yarn travelling speed using $\Delta T$ can be carried out in the unit control section 50.

In the above embodiment, the yarn travelling speed calculated by the clearer 15 is output to the unit control section 50, but the yarn travelling speed may be output as numerical data or may be output in other forms. For example, the fixed yarn length pulse signal described above may be output to the unit control section 50.

Since the second A/D converter 46 arranged in the clearer 15 is provided for performing FFT calculation, the second A/D converter 46 may be omitted if the FFT calculation is not carried out.

In the above embodiment, the sampling speed is acquired in accordance with the rotation pulse signal from the rotation sensor 42 configured as the rotary encoder, but the present invention is not limited thereto.

In the above embodiment, an example in which the history weighting curve and the sampling speed weighting curve are used as the weighting curve has been described, but only either one of the weighting curves may be used.

In the above embodiment, the head position of the downstream frame is fixed, and the similarity degree is obtained while shifting the head position of the upstream frame. In place of this configuration, the head position of the upstream frame may be fixed, and the similarity degree may be obtained while shifting the head position of the downstream frame. The similarity degree may be obtained while shifting both the downstream frame and the upstream frame. However, if the downstream frame is fixed at a position including the most recent data of the waveform data included in the downstream ring buffer, the similarity degree can be calculated in real time while always using the most recent data.

In the above embodiment, the functions of the similarity degree evaluating section 65, the weighting processing section 66, the travelling information acquiring section 67, the yarn quality measuring section 68, the sampling speed acquiring section 72, the measuring section 73, and the like are realized by hardware and software, but some or all of these functions may be realized with a dedicated hardware.

**Claims**

1.  A yarn travelling information acquiring device comprising:

    a first detecting section (43) adapted to detect a thickness unevenness of a travelling yarn (20) and to output a first yarn thickness unevenness signal;
    a second detecting section (44) arranged upstream in a yarn travelling direction at a distance from the first detecting section (43), and adapted to detect the thickness unevenness of the yarn (20) and to output a second yarn thickness unevenness signal;
    a similarity degree evaluating section (65) adapted to determine a plurality of similarity degrees of the first yarn thickness unevenness signal and the second yarn thickness unevenness signal in accordance with the first yarn thickness unevenness signal acquired within a first time range, and the second yarn thickness unevenness signal acquired within a second time range, the second time range being longer than the first time range;
    a weighting processing section (66) adapted to perform a weighting processing on each of the plurality of the similarity degrees using a weighting factor and to calculate a plurality of weighted similarity degrees; and
    a travelling information acquiring section (67) adapted to calculate a time delay between the first yarn thickness unevenness signal and the second yarn thickness unevenness signal in accordance with a maximum weighted similarity degree among the plurality of the weighted similarity degrees, and to acquire travelling information of the yarn (20) in accordance with the distance and the time delay, **characterized in that** the weighting factor is designated by a weighting curve according to a speed ratio being obtained in accordance with a reference delay amount and a calculated delay amount of the first yarn thickness unevenness signal and the second yarn thickness unevenness signal.

2.  The yarn travelling information acquiring device according to claim 1, **characterized in that** the weighting factor is designated by the weighting curve having one maximum value.

3.  The yarn travelling information acquiring device according to claim 2, **characterized in that** the maximum value of the weighting curve is set in accordance with the travelling information acquired in the past by the travelling information acquiring section (67).

4.  The yarn travelling information acquiring device according to claim 2, further comprising a sampling speed acquiring section (72) adapted to acquire a sampling speed of the yarn (20),
    **characterized in that** the maximum value of the weighting curve is set in accordance with the travelling information when the yarn (20) travelled with the sampling speed.

5.  The yarn travelling information acquiring device according to claim 2, further comprising a sampling speed acquiring section (72) adapted to acquire a sampling speed of the yarn (20),
    **characterized in that** the weighting curve includes a history weighting curve and a sampling speed weighting curve, the history weighting curve being a curve in which the maximum value is set in accordance with the travelling information acquired in the past by the travelling information acquiring section (67), and the sampling speed weighting curve being a curve in which the maximum value is set in accordance with the travelling information when the yarn (20) travelled under the sampling speed,
    the weighting processing section (66) is adapted to perform the weighting processing using the history weighting curve and the weighting processing using the sampling speed weighting curve, and
    the travelling information acquiring section (67) is adapted to extract as a target weighted similarity degree, the weighted similarity degree satisfying an extracting condition, from the plurality of the weighted similarity degrees on which the weighting processing has been performed using the history weighting curve and the plurality of the weighted similarity degrees on which the weighting processing has been performed using the sampling speed weighting curve, and to acquire new travelling information of the yarn (20) in accordance with the target weighted similarity degree.

6.  The yarn travelling information acquiring device according to claim 5, **characterized in that** the travelling information acquiring section (67) is adapted to correct the weighting factor designated by the history weighting curve and the weighting factor designated by the sampling speed weighting curve in accordance with the target weighted similarity degree calculated in the past.

7.  The yarn travelling information acquiring device according to claim 6, **characterized in that** the travelling information acquiring section (67) is adapted to increase a value of the weighting factor designated by the history weighting curve accompanying an increase in the target weighted similarity degree calculated in the past, and to increase a value of the weighting factor designated by the sampling speed weighting curve accompanying a decrease in the target weighted similarity degree calculated in the past.

8. The yarn travelling information acquiring device according to any one of claim 5 through claim 7, **characterized in that** the travelling information acquiring section (67) is adapted to extract as the target weighted similarity degree, the weighted similarity degree having a maximum similarity degree value among the plurality of the weighted similarity degrees,

when the travelling information acquiring section (67) fails in said extraction, the travelling information acquiring section (67) is adapted to extract as the target weighted similarity degree, a weighted similarity degree on which the weighting processing has been performed on a similarity degree having a maximum value among the plurality of the similarity degrees calculated by the similarity degree evaluating section (65), and

when the travelling information acquiring section (67) fails in said extraction, the travelling information acquiring section (67) is adapted to extract from the plurality of the weighted similarity degrees as the target weighted similarity degree, the weighted similarity degree having a value closest to the weighted similarity degree of when the travelling information was acquired in the past.

9. The yarn traveling information acquiring device according to any one of claim 1 through claim 8, **characterized in that** the similarity degree evaluating section (65) is adapted to calculate a plurality of similarity-degree maximum points which are respectively maximum points of the plurality of the similarity degrees, and

the weighting processing section (66) is adapted to perform the weighting processing on the similarity-degree maximum points and to calculate the weighted similarity degrees.

10. The yarn travelling information acquiring device according to any one of claim 1 through claim 9, further comprising a measuring section (73) adapted to measure a sampling time interval, the sampling time interval being a time interval in which each of the first yarn thickness unevenness signal and the second yarn thickness unevenness signal is sampled, **characterized in that**

the travelling information acquiring section (67) is adapted to calculate the time delay in accordance with the sampling time interval measured by the measuring section (73).

11. A yarn processing device, **characterized by**

the yarn travelling information acquiring device (15) according to any one of claim 1 through claim 10;

a yarn processing section (16) adapted to perform a processing on the yarn (20); and

a control section (50) adapted to control the processing performed by the yarn processing section (16) in accordance with the travelling information of the yarn (20) acquired by the yarn travelling information acquiring device (15).

12. A method for acquiring yarn travelling information comprising:

detecting a thickness unevenness of a travelling yarn (20) and outputting a first yarn thickness unevenness signal using a first detecting section (43);

detecting the thickness unevenness of the yarn (20) and outputting a second yarn thickness unevenness signal using a second detecting section (44) arranged upstream in a yarn travelling direction at a distance from the first detecting section (43);

determining a plurality of similarity degrees of the first yarn thickness unevenness signal and the second yarn thickness unevenness signal in accordance with the first yarn thickness unevenness signal acquired within a first time range, and the second yarn thickness unevenness signal acquired within a second time range, the second time range being longer than the first time range;

performing a weighting processing on each of the plurality of the similarity degrees using a weighting factor and to calculate a plurality of weighted similarity degrees; and

calculating a time delay between the first yarn thickness unevenness signal and the second yarn thickness unevenness signal in accordance with a maximum weighted similarity degree among the plurality of the weighted similarity degrees, and acquiring travelling information of the yarn (20) in accordance with the distance and the time delay, **characterized in that** the weighting factor is designated by a weighting curve according to a speed ratio being obtained in accordance with a reference delay amount and a calculated delay amount of the first yarn thickness unevenness signal and the second yarn thickness unevenness signal.

13. The method according to claim 12, **characterized in that** the weighting factor is designated using the weighting curve having one maximum value.

**14.** The method according to claim 13, **characterized in that** the maximum value of the weighting curve is set in accordance with the travelling information acquired in the past.

**15.** The method according to claim 13, further comprising the step of: acquiring a sampling speed of the yarn (20), **characterized in that** the maximum value of the weighting curve is set in accordance with the travelling information when the yarn (20) travelled with the sampling speed.

**16.** The method according to claim 13, further comprising the step of acquiring a sampling speed of the yarn (20), **characterized in that** the weighting curve includes a history weighting curve and a sampling speed weighting curve, wherein the history weighting curve is a curve in which the maximum value is set in accordance with the travelling information acquired in the past, and the sampling speed weighting curve is a curve in which the maximum value is set in accordance with the travelling information when the yarn (20) travelled under the sampling speed, **characterized by** performing the weighting processing using the history weighting curve and the weighting processing using the sampling speed weighting curve, and
extracting as a target weighted similarity degree, the weighted similarity degree satisfying an extracting condition, from the plurality of the weighted similarity degrees on which the weighting processing has been performed using the history weighting curve and the plurality of the weighted similarity degrees on which the weighting processing has been performed using the sampling speed weighting curve, and acquiring new travelling information of the yarn (20) in accordance with the target weighted similarity degree.

**17.** The method according to claim 16, **characterized by** correcting the weighting factor designated by the history weighting curve and the weighting factor designated by the sampling speed weighting curve in accordance with the target weighted similarity degree calculated in the past.

**18.** The method according to claim 17, **characterized by** increasing a value of the weighting factor designated by the history weighting curve accompanying an increase in the target weighted similarity degree calculated in the past, and increasing a value of the weighting factor designated by the sampling speed weighting curve accompanying a decrease in the target weighted similarity degree calculated in the past.

**19.** The method according to any one of claim 16 through claim 18, **characterized by** extracting as the target weighted similarity degree, the weighted similarity degree having a maximum similarity degree value among the plurality of the weighted similarity degrees,
when failing in said extraction, extracting as the target weighted similarity degree, a weighted similarity degree on which the weighting processing has been performed on a similarity degree having a maximum value among the plurality of the calculated similarity degrees and
when) failing in said extraction, extracting from the plurality of the weighted similarity degrees as the target weighted similarity degree, the weighted similarity degree having a value closest to the weighted similarity degree of when the travelling information was acquired in the past.

**20.** The method according to any one of claim 12 through claim 19, **characterized by** calculating a plurality of similarity-degree maximum points which are respectively maximum points of the plurality of the similarity degrees, and performing the weighting processing the similarity-degree maximum points and calculating the weighted similarity degrees.

**21.** The method according to any one of claim 12 through claim 20, further comprising the steps of measuring a sampling time interval, the sampling time interval being a time interval in which each of the first yarn thickness unevenness signal and the second yarn thickness unevenness signal is sampled, **characterized by**
calculating the time delay in accordance with the measured sampling time interval.

**Patentansprüche**

**1.** Vorrichtung zur Erfassung von Garnlaufinformationen, welche umfasst:

einen ersten Erfassungsabschnitt (43), der dazu ausgebildet ist, eine Dickenungleichmäßigkeit eines laufenden Garns (20) zu erfassen und ein erstes Garndickenungleichmäßigkeits-Signal auszugeben;
einen zweiten Erfassungsabschnitt (44), der in einer Garnlaufrichtung mit einem Abstand stromaufwärts des ersten Erfassungsabschnitts (43) angeordnet ist und dazu ausgebildet ist, die Dickenungleichmäßigkeit des Garns (20) zu erfassen und ein zweites Garndickenungleichmäßigkeits-Signal auszugeben;
einen Abschnitt zur Bewertung des Ähnlichkeitsgrads (65), der dazu ausgebildet ist, eine Mehrzahl von Ähnlichkeitsgraden des ersten Garndickenungleichmäßigkeits-Signals und des zweiten Garndickenungleichmäßigkeits-Signals entsprechend dem ersten Garndickenungleichmäßigkeits-Signal, das innerhalb eines ersten Zeitraums erfasst wurde, und dem zweiten Garndickenungleichmäßigkeits-Signal, das innerhalb eines zweiten Zeitraums erfasst wurde, zu bestimmen, wobei der zweite Zeitraum länger ist als der erste Zeitraum;
einen Gewichtungsbearbeitungs-Abschnitt (66), welcher dazu ausgebildet ist, unter Verwendung eines Gewichtungsfaktors eine Gewichtungsbearbeitung zu jedem der Mehrzahl von Ähnlichkeitsgraden durchzuführen und eine Mehrzahl von gewichteten Ähnlichkeitsgraden zu berechnen; und

einen Laufinformationserfassungs-Abschnitt (67), der dazu ausgebildet ist, gemäß einem maximalen gewichteten Ähnlichkeitsgrad aus der Mehrzahl von gewichteten Ähnlichkeitsgraden eine Zeitverzögerung zwischen dem ersten Garndickenungleichmäßigkeits-Signal und dem zweiten Garndickenungleichmäßigkeits-Signal zu berechnen und Laufinformationen zu dem Garn (20) entsprechend dem Abstand und der Zeitverzögerung zu erfassen, **dadurch gekennzeichnet, dass** der Gewichtungsfaktor durch eine Gewichtungskurve bestimmt ist, entsprechend einem Geschwindigkeitsverhältnis, welches gemäß einem Referenzverzögerungsmaß und einem berechneten Verzögerungsmaß des ersten Garndickenungleichmäßigkeits-Signals und des zweiten Garndickenungleichmäßigkeits-Signals erhalten wird.

2. Vorrichtung zur Erfassung von Garnlaufinformationen nach Anspruch 1, **dadurch gekennzeichnet, dass** der Gewichtungsfaktor durch die Gewichtungskurve mit einem Maximalwert bestimmt ist.

3. Vorrichtung zur Erfassung von Garnlaufinformationen nach Anspruch 2, **dadurch gekennzeichnet, dass** der Maximalwert der Gewichtungskurve gemäß den in der Vergangenheit durch den Laufinformationserfassungs-Abschnitt (67) erfassten Laufinformationen eingestellt ist.

4. Vorrichtung zur Erfassung von Garnlaufinformationen nach Anspruch 2, welche ferner einen Abtastgeschwindigkeits-Erfassungsabschnitt (72) umfasst, der dazu ausgebildet ist, eine Abtastgeschwindigkeit des Garns (20) zu erfassen,
**dadurch gekennzeichnet, dass** der Maximalwert der Gewichtungskurve gemäß den Laufinformationen eingestellt ist, wenn das Garn (20) mit Abtastgeschwindigkeit läuft.

5. Vorrichtung zur Erfassung von Garnlaufinformationen nach Anspruch 2, welche ferner einen Abtastgeschwindigkeits-Erfassungsabschnitt (72) umfasst, der dazu ausgebildet ist, eine Abtastgeschwindigkeit des Garns (20) zu erfassen,
**dadurch gekennzeichnet, dass** die Gewichtungskurve eine historische Gewichtungskurve und eine Abtastgeschwindigkeits-Gewichtungskurve umfasst, wobei die historische Gewichtungskurve eine Kurve ist, bei welcher der Maximalwert gemäß den Laufinformationen eingestellt ist, die in der Vergangenheit durch den Laufinformationserfassungs-Abschnitt (67) erfasst wurden, und die Abtastgeschwindigkeits-Gewichtungskurve eine Kurve ist, bei welcher der Maximalwert gemäß den Laufinformationen zu dem Garn (20) eingestellt ist, das mit Abtastgeschwindigkeit läuft,
wobei der Gewichtungsbearbeitungs-Abschnitt (66) dazu ausgebildet ist, die Gewichtungsbearbeitung unter Verwendung der historischen Gewichtungskurve und die Gewichtungsbearbeitung unter Verwendung der Abtastgeschwindigkeits-Gewichtungskurve durchzuführen, und
wobei der Laufinformationserfassungs-Abschnitt (67) dazu ausgebildet ist, als einen angestrebten gewichteten Ähnlichkeitsgrad den gewichteten Ähnlichkeitsgrad zu extrahieren, der eine Extraktionsbedingung erfüllt, aus der Mehrzahl gewichteter Ähnlichkeitsgrade, an denen die Gewichtungsbearbeitung unter Verwendung der historischen Gewichtungskurve durchgeführt wurde, und aus der Mehrzahl gewichteter Ähnlichkeitsgrade, an denen die Gewichtungsbearbeitung unter Verwendung der Abtastgeschwindigkeits-Gewichtungskurve durchgeführt wurde, und dazu, neue Laufinformationen zu dem Garn (20) gemäß dem angestrebten gewichteten Ähnlichkeitsgrad zu erhalten.

6. Vorrichtung zur Erfassung von Garnlaufinformationen nach Anspruch 5, **dadurch gekennzeichnet, dass** der Laufinformationserfassungs-Abschnitt (67) dazu ausgebildet ist, den durch die historische Gewichtungskurve bestimmten Gewichtungsfaktor zu korrigieren und den durch die Abtastgeschwindigkeits-Gewichtungskurve bestimmten Gewichtungsfaktor, gemäß dem in der Vergangenheit berechneten angestrebten gewichteten Ähnlichkeitsgrad zu korrigieren.

7. Vorrichtung zur Erfassung von Garnlaufinformationen nach Anspruch 6, **dadurch gekennzeichnet, dass** der Laufinformationserfassungs-Abschnitt (67) dazu ausgebildet ist, einen durch die historische Gewichtungskurve bestimmten Gewichtungsfaktor zu vergrößern, begleitend zu einer Erhöhung des in der Vergangenheit berechneten angestrebten gewichteten Ähnlichkeitsgrads, und einen Wert des durch die Abtastgeschwindigkeits-Gewichtungskurve bestimmten Gewichtungsfaktors zu vergrößern, begleitend zu einer Abnahme des in der Vergangenheit berechneten Ähnlichkeitsgrads.

8. Vorrichtung zur Erfassung von Garnlaufinformationen nach einem der Ansprüche 5 bis 7, **dadurch gekennzeichnet, dass** der Laufinformationserfassungs-Abschnitt (67) dazu ausgebildet ist, als angestrebten gewichteten Ähnlichkeitsgrad den gewichteten Ähnlichkeitsgrad mit einem maximalen Ähnlichkeitsgrad-Wert unter der Mehrzahl der gewichteten Ähnlichkeitsgrade zu extrahieren,
wenn der Laufinformationserfassungs-Abschnitt (67) bei dieser Extraktion versagt, ist der Laufinformationserfassungs-Abschnitt (67) dazu ausgebildet, als den angestrebten gewichteten Ähnlichkeitsgrad einen gewichteten Ähnlichkeitsgrad zu extrahieren, bei welchem die Gewichtungsbearbeitung mit einem Ähnlichkeitsgrad durchgeführt wurde, der einen Maximalwert unter der Mehrzahl der durch den Abschnitt zur Bewertung des Ähnlichkeitsgrads (65) berechneten Ähnlichkeitsgrade aufweist, und
wenn der Laufinformationserfassungs-Abschnitt (67) bei dieser Extraktion versagt, ist der Laufinformationserfassungs-Abschnitt (67) dazu ausgebildet, aus der Mehrzahl der gewichteten Ähnlichkeitsgrade als den angestrebten gewichteten Ähnlichkeitsgrad denjenigen Ähnlichkeitsgrad zu extrahieren, der einen Wert aufweist, der dem gewichteten Ähnlichkeitsgrad der in der Vergangenheit erfassten Laufinformation am nächsten ist.

9. Vorrichtung zur Erfassung von Garnlaufinformationen nach einem der Ansprüche 1 bis 8, **dadurch gekennzeichnet, dass** der Abschnitt zur Bewertung des Ähnlichkeitsgrads (65) dazu ausgebildet ist, eine Mehrzahl von Ähnlichkeitsgrad-Maximalpunkten zu berechnen, welche jeweils Maximalpunkte der Mehrzahl von Ähnlichkeitsgraden sind, und dass der Gewichtungs-Bearbeitungsabschnitt (66) dazu ausgebildet ist, die Gewichtungsbearbeitung zu den Ähnlichkeitsgrad-Maximalpunkten durchzuführen und die gewichteten Ähnlichkeitsgrade zu berechnen.

10. Vorrichtung zur Erfassung von Garnlaufinformationen nach einem der Ansprüche 1 bis 9, welche ferner einen Messabschnitt (73) umfasst, der dazu ausgebildet ist, ein Abtast-Zeitintervall zu messen, wobei das Abtast-Zeitintervall ein Zeitintervall ist, in welchem jedes aus dem ersten Garndickenungleichmäßigkeits-Signal und dem zweiten Garndickenungleichmäßigkeits-Signal abgetastet wird, **dadurch gekennzeichnet, dass**
der Laufinformationserfassungs-Abschnitt (67) dazu ausgebildet ist, die Zeitverzögerung gemäß dem von dem Messabschnitt (73) gemessenen Abtastzeitintervall zu berechnen.

11. Garnbearbeitungsvorrichtung, **gekennzeichnet durch** eine Vorrichtung zur Erfassung von Garnlaufinformationen (15) nach einem der Ansprüche 1 bis 10;
einen Garnbearbeitungsabschnitt (16), der dazu ausgebildet ist, eine Bearbeitung des Garns (20) durchzuführen; und
einen Kontrollabschnitt (50), der dazu ausgebildet ist, die **durch** den Garnbearbeitungsabschnitt (16) gemäß den **durch** die Vorrichtung zur Erfassung von Garnlaufinformationen (15) erfassten Laufinformationen zum Garn (20) durchgeführte Bearbeitung zu steuern/regeln.

12. Verfahren zur Erfassung von Garnlaufinformationen, umfassend:

Erfassen einer Dickenungleichmäßigkeit eines laufenden Garns (20) und Ausgeben eines ersten Garndickenungleichmäßigkeits-Signals unter Verwendung eines ersten Erfassungsabschnitts (43);
Erfassen der Dickenungleichmäßigkeit des Garns (20) und Ausgeben eines zweiten Garndickenungleichmäßigkeits-Signals unter Verwendung eines zweiten Erfassungsabschnitts (44), der in einer Garnlaufrichtung mit einem Abstand stromaufwärts des ersten Erfassungsabschnitts (43) angeordnet ist;
Bestimmen einer Mehrzahl von Ähnlichkeitsgraden des ersten Garndickenungleichmäßigkeits-Signals und des zweiten Garndickenungleichmäßigkeits-Signals entsprechend dem ersten Garndickenungleichmäßigkeits-Signal, das innerhalb eines ersten Zeitraums erfasst wurde/wird, und dem zweiten Garndickenungleichmäßigkeits-Signals, das innerhalb eines zweiten Zeitraums erfasst wurde/wird, wobei der zweite Zeitraum länger ist als der erste Zeitraum;
Durchführen einer Gewichtungsbearbeitung zu jedem der Mehrzahl von Ähnlichkeitsgraden unter Verwendung eines Gewichtungsfaktors und Berechnen einer Mehrzahl von gewichteten Ähnlichkeitsgraden; und Berechnen einer Zeitverzögerung zwischen dem ersten Garndickenungleichmäßigkeits-Signal und dem zweiten Garndickenungleichmäßigkeits-Signal gemäß einem maximalen gewichteten Ähnlichkeitsgrad unter der Mehrzahl der gewichteten Ähnlichkeitsgrade und

Erfassen von Laufinformationen zu dem Garn (20) entsprechend dem Abstand und der Zeitverzögerung, **dadurch gekennzeichnet, dass** der Gewichtungsfaktor durch eine Gewichtungskurve bestimmt ist/wird, entsprechend einem Geschwindigkeitsverhältnis, welches gemäß einem Referenzverzögerungsumfang und einem berechneten Verzögerungsumfang des ersten Garndickenungleichmäßigkeits-Signals und des zweiten Garndickenungleichmäßigkeits-Signals erhalten wird.

13. Verfahren nach Anspruch 12, **dadurch gekennzeichnet, dass** der Gewichtungsfaktor unter Verwendung der Gewichtungskurve bestimmt wird, die einen Maximalwert aufweist.

14. Verfahren nach Anspruch 13, **dadurch gekennzeichnet, dass** der Maximalwert der Gewichtungskurve gemäß den in der Vergangenheit erfassten Laufinformationen eingestellt wird.

15. Verfahren nach Anspruch 13, welches ferner den folgenden Schritt umfasst:

Erlangen einer Abtastgeschwindigkeit des Garns (20),

**dadurch gekennzeichnet, dass** der Maximalwert der Gewichtungskurve gemäß den Laufinformationen eingestellt wird, wenn das Garn (20) mit Abtastgeschwindigkeit läuft.

16. Verfahren nach Anspruch 13, welches ferner den folgenden Schritt umfasst:

Erlangen einer Abtastgeschwindigkeit des Garns (20), **dadurch gekennzeichnet, dass** die Gewichtungskurve eine historische Gewichtungskurve und eine Abtastgeschwindigkeits-Gewichtungskurve umfasst, wobei die historische Gewichtungskurve eine Kurve ist, bei welcher der Maximalwert gemäß den in der Vergangenheit erfassten Laufinformationen eingestellt wird, und die Abtastgeschwindigkeits-Gewichtungskurve eine Kurve ist, bei welcher der Maximalwert gemäß den Laufinformationen zu dem Garn (20) eingestellt wird, das mit Abtastgeschwindigkeit läuft,
**gekennzeichnet durch** eine Durchführung der Gewichtungsbearbeitung unter Verwendung der historischen Gewichtungskurve und der Gewichtungsbearbeitung unter Verwendung der Abtastgeschwindigkeits-Gewichtungskurve, und

Extrahieren des gewichteten Ähnlichkeitsgrads, der eine Extraktionsbedingung erfüllt, als einen angestrebten gewichteten Ähnlichkeitsgrad, aus der Mehrzahl gewichteter Ähnlichkeitsgrade, an denen die Gewichtungsbearbeitung unter Verwendung der historischen Gewichtungskurve durchgeführt wurde, und aus der Mehrzahl gewichteter Ähnlichkeitsgrade, an denen die Gewichtungsbearbeitung unter Verwendung der Abtastgeschwindigkeits-Gewichtungskurve durchgeführt wurde, und Erhalten neuer Laufinformationen zu dem Garn (20) gemäß dem angestrebten gewichteten Ähnlichkeitsgrad.

17. Verfahren nach Anspruch 16, **gekennzeichnet durch** die Korrektur des **durch** die historische Gewichtungskurve bestimmten Gewichtungsfaktors und des durch die Abtastgeschwindigkeits-Gewichtungskurve bestimmten Gewichtungsfaktors, gemäß dem in der Vergangenheit berechneten angestrebten gewichteten Ähnlichkeitsgrad.

18. Verfahren nach Anspruch 17, **gekennzeichnet durch** Vergrößern eines Wertes des **durch** die historische Gewichtungskurve bestimmten Gewichtungsfaktors begleitend zu einer Erhöhung des in der Vergangenheit berechneten angestrebten gewichteten Ähnlichkeitsgrads, und Vergrößern eines Wertes des **durch** die Abtastgeschwindigkeits-Gewichtungskurve bestimmten Gewichtungsfaktors, begleitend zu einer Abnahme des in der Vergangenheit berechneten Ähnlichkeitsgrads.

19. Verfahren nach einem der Ansprüche 16 bis 18, **gekennzeichnet durch** Extraktion als angestrebter gewichteter Ähnlichkeitsgrad des gewichteten Ähnlichkeitsgrads mit einem maximalen Ähnlichkeitsgrad-Wert unter der Mehrzahl der gewichteten Ähnlichkeitsgrade,
bei Versagen bei dieser Extraktion, Extrahieren als angestrebter gewichteter Ähnlichkeitsgrad eines gewichteten Ähnlichkeitsgrads, bei welchem die Gewichtungsbearbeitung mit einem Ähnlichkeitsgrad durchgeführt wurde, der einen Maximalwert unter der Mehrzahl der Ähnlichkeitsgrade aufweist, und bei Versagen bei dieser Extraktion, Extrahieren, aus der Mehrzahl der gewichteten Ähnlichkeitsgrade als angestrebter gewichteter Ähnlichkeitsgrad desjenigen Ähnlichkeitsgrads, der einen Wert aufweist, der dem gewichteten Ähnlichkeitsgrad der in der Vergangenheit erfassten Laufinformation am nächsten ist.

**20.** Verfahren nach einem der Ansprüche 12 bis 19, **gekennzeichnet durch** Berechnen einer Mehrzahl von Ähnlichkeitsgrad-Maximalpunkten, welche jeweils Maximalpunkte der Mehrzahl von Ähnlichkeitsgraden sind, und Durchführen der Gewichtungsbearbeitung zu den Ähnlichkeitsgrad-Maximalpunkten und Berechnen der gewichteten Ähnlichkeitsgrade.

**21.** Verfahren nach einem der Ansprüche 12 bis 20, welches ferner die Schritte des Messens eines Abtast-Zeitintervalls umfasst, wobei das Abtast-Zeitintervall ein Zeitintervall ist, in welchem jedes aus dem ersten Garndickenungleichmäßigkeits-Signal und dem zweiten Garndickenungleichmäßigkeits-Signal abgetastet wird, **gekennzeichnet durch** Berechnen der Zeitverzögerung gemäß dem gemessenen Abtastzeitintervall.

## Revendications

**1.** Un dispositif d'acquisition d'informations de déplacement de fil, comprenant:

une première section de détection (43) adaptée pour détecter une irrégularité d'épaisseur d'un fil en déplacement (20) et pour sortir un premier signal d'irrégularité d'épaisseur de fil;
une deuxième section de détection (44) arrangée en amont dans un sens de déplacement de fil, à une distance de la première section de détection (43), et adaptée pour détecter l'irrégularité d'épaisseur du fil (20) et pour sortir un deuxième signal d'irrégularité d'épaisseur de fil;
une section d'évaluation du degré de similarité (65) adaptée pour déterminer une pluralité de degrés de similarité du premier signal d'irrégularité d'épaisseur de fil et du deuxième signal d'irrégularité d'épaisseur de fil selon le premier signal d'irrégularité d'épaisseur de fil acquis dans un premier intervalle de temps et le deuxième signal d'irrégularité d'épaisseur de fil acquis dans un deuxième intervalle de temps, le deuxième intervalle de temps étant plus long que le premier intervalle de temps;
une section de traitement de pondération (66) adaptée pour effectuer un traitement de pondération de chacun de la pluralité de degrés de similarité utilisant un facteur de pondération et pour calculer une pluralité de degrés de similarité pondérés; et

une section d'acquisition d'informations de déplacement (67) adaptée pour calculer un délai entre le premier signal d'irrégularité d'épaisseur de fil et le deuxième signal d'irrégularité d'épaisseur de fil selon un degré de similarité pondéré maximal de la pluralité de degrés de similarité pondérés, et pour acquérir des informations de déplacement du fil (20) selon la distance et le délai, **caractérisée en ce que** le facteur de pondération est désigné par une courbe de pondération selon un rapport de vitesse obtenu selon une valeur de délai de référence et une valeur de délai calculé du premier signal d'irrégularité d'épaisseur de fil et du deuxième signal d'irrégularité d'épaisseur de fil.

**2.** Le dispositif d'acquisition d'informations de déplacement de fil selon la revendication 1, **caractérisé en ce que** le facteur de pondération est désigné par la courbe de pondération ayant une valeur maximale.

**3.** Le dispositif d'acquisition d'informations de déplacement de fil selon la revendication 2, **caractérisé en ce que** la valeur maximale de la courbe de pondération est définie selon les informations de déplacement acquises dans le passé par la section d'acquisition d'informations de déplacement (67).

**4.** Le dispositif d'acquisition d'informations de déplacement de fil selon la revendication 2, comprenant en outre une section d'acquisition de vitesse d'échantillonnage (72) adaptée pour acquérir une vitesse d'échantillonnage du fil (20), **caractérisé en ce que** la valeur maximale de la courbe de pondération est définie selon les informations de déplacement quand le fil (20) se déplace à la vitesse d'échantillonnage.

**5.** Le dispositif d'acquisition d'informations de déplacement de fil selon la revendication 2, comprenant en outre une section d'acquisition de vitesse d'échantillonnage (72) adaptée pour acquérir une vitesse d'échantillonnage du fil (20), **caractérisé en ce que** la courbe de pondération comprend une courbe d'histoire de pondération et une courbe de pondération de vitesse d'échantillonnage, la courbe d'histoire de pondération étant une courbe où la valeur maximale est définie selon les informations de déplacement acquises dans le passé par la section d'acquisition d'informations de déplacement (67) et la courbe de pondération de vitesse d'échantillonnage étant une courbe où la valeur maximale est définie selon les informations de déplacement acquises quand le fil (20) se déplace en vitesse d'échantillonnage, où la section de traitement de pondération (66) est adaptée pour effectuer le traitement de pondération utilisant la courbe d'histoire de pondération et le traitement de pondération utilisant la courbe de pondération de vitesse d'échantillonnage, et

où la section d'acquisition d'informations de déplacement (67) est adaptée pour extraire comme un degré de similarité cible le degré de similarité pondéré remplissant une condition d'extraction, de la pluralité des degrés de similarité pondérés sur lesquels le traitement de pondération a été effectué utilisant la courbe d'histoire de pondération et la pluralité des degrés de similarité pondérés sur lesquels le traitement de pondération a été effectué utilisant la courbe de pondération de vitesse d'échantillonnage, et pour acquérir de nouvelles informations de déplacement du fil (20) selon le degré de similarité pondéré cible.

6. Le dispositif d'acquisition d'informations de déplacement de fil selon la revendication 5, **caractérisé en ce que** la section d'acquisition d'informations de déplacement (67) est adaptée pour corriger le facteur de pondération désigné par la courbe d'histoire et le facteur de pondération désigné par la courbe de pondération de vitesse d'échantillonnage selon le degré de similarité pondéré cible calculé dans le passé.

7. Le dispositif d'acquisition d'informations de déplacement de fil selon la revendication 6, **caractérisé en ce que** la section d'acquisition d'informations de déplacement (67) est adaptée pour augmenter une valeur du facteur de pondération désigné par la courbe d'histoire de pondération accompagnant une augmentation du degré de similarité pondéré cible calculé dans le passé et pour augmenter une valeur du facteur de pondération désigné par la courbe de pondération de vitesse d'échantillonnage accompagnant une réduction du degré de similarité pondéré cible calculé dans le passé.

8. Le dispositif d'acquisition d'informations de déplacement de fil selon une des revendications 5 à 7, **caractérisé en ce que** la section d'acquisition d'informations de déplacement (67) est adaptée pour extraire, comme un degré de similarité cible, le degré de similarité pondéré ayant une valeur de degré de similarité maximale parmi la pluralité de degrés de similarité pondérés,
quand la section d'acquisition d'informations de déplacement (67) échoue à l'extraction, la section d'acquisition d'informations de déplacement (67) est adaptée pour extraire comme degré de similarité pondéré cible un degré de similarité pondéré sur lequel le traitement de pondération a été effectué sur un degré de similarité ayant une valeur maximale parmi la pluralité de degrés de similarité pondérés calculés par la section d'évaluation du degré de similarité (65), et
quand la section d'acquisition d'informations de déplacement (67) échoue à l'extraction, la section d'acquisition d'informations de déplacement (67) est adaptée pour extraire de la pluralité de degrés de similarité pondérés comme un degré de similarité cible le degré de similarité pondéré ayant une valeur le plus proche du degré de similarité pondéré des informations acquises dans le passé.

9. Le dispositif d'acquisition d'informations de déplacement de fil selon une des revendications 1 à 8, **caractérisé en ce que** la section d'évaluation du degré de similarité (65) est adaptée pour calculer une pluralité de points maximum de degré de similarité qui sont respectivement des points maximum de la pluralité de degrés de similarité, et
où la section de traitement de pondération (66) est adaptée pour effectuer le traitement de pondération aux points maximum de degré de similarité et pour calculer les degrés de similarité pondéré.

10. Le dispositif d'acquisition d'informations de déplacement de fil selon une des revendications 1 à 9, comprenant en outre une section de mesure (73) adaptée pour mesurer un intervalle de période d'échantillonnage, l'intervalle de période d'échantillonnage étant un intervalle où chacun du premier signal d'irrégularité d'épaisseur de fil et du deuxième signal d'irrégularité d'épaisseur de fil est échantillonné, **caractérisé en ce que**
la section d'acquisition d'informations de déplacement (67) est adaptée pour calculer le délai selon l'intervalle de période d'échantillonnage mesuré par la section de mesure (73).

11. Un dispositif de traitement de fil, **caractérisé par** le dispositif d'acquisition d'informations de déplacement de fil (15) selon une des revendications 1 à 10; une section de traitement de fil (16) adaptée pour effectuer un traitement du fil (20) ; et
une section de contrôle (50) adaptée pour contrôler le traitement effectué par la section de traitement de fil (16) selon les informations de déplacement du fil (20) acquises par le dispositif d'acquisition d'informations de déplacement de fil (15).

12. Un procédé pour acquérir des informations de déplacement de fil, comprenant:

détecter une irrégularité d'épaisseur d'un fil en déplacement (20) et sortir un premier signal d'irrégularité d'épaisseur de fil en utilisant une première section de détection (43);
détecter l'irrégularité d'épaisseur du fil (20) et sortir un deuxième signal d'irrégularité d'épaisseur de fil en utilisant une deuxième section de détection (44) arrangée en amont dans un sens de déplacement de fil à une distance de la première section de détection (43),

déterminer une pluralité de degrés de similarité du premier signal d'irrégularité d'épaisseur de fil et du deuxième signal d'irrégularité d'épaisseur de fil selon le premier signal d'irrégularité d'épaisseur de fil acquis dans un premier intervalle de temps et le deuxième signal d'irrégularité d'épaisseur de fil acquis dans un deuxième intervalle de temps, le deuxième intervalle de temps étant plus long que le premier intervalle de temps;

effectuer un traitement de pondération sur chacun de la pluralité de degrés de similarité utilisant un facteur de pondération et pour calculer une pluralité de degrés de similarité pondérés; et

calculer un délai entre le premier signal d'irrégularité d'épaisseur de fil et le deuxième signal d'irrégularité d'épaisseur de fil selon un degré de similarité pondéré maximal de la pluralité de degrés de similarité pondérés, et acquérir des informations de déplacement du fil (20) selon la distance et le délai,

**caractérisée en ce que** le facteur de pondération est désigné par une courbe de pondération selon un rapport de vitesse obtenu selon une valeur de délai de référence et une valeur de délai du premier signal d'irrégularité d'épaisseur de fil et du deuxième signal d'irrégularité d'épaisseur de fil.

13. Le procédé selon la revendication 12, **caractérisé en ce que** le facteur de pondération est désigné par la courbe de pondération ayant une valeur maximale.

14. Le procédé selon la revendication 13, **caractérisé en ce que** la valeur maximale de la courbe de pondération est définie selon les informations de déplacement acquises dans le passé.

15. Le procédé selon la revendication 13, comprenant en outre l'étape suivante:

acquérir une vitesse d'échantillonnage du fil (20),

**caractérisé en ce que** la valeur maximale de la courbe de pondération est définie selon les informations de déplacement quand le fil (20) se déplace à la vitesse d'échantillonnage.

16. Le procédé selon la revendication 13, comprenant en outre l'étape suivante:

acquérir une vitesse d'échantillonnage du fil (20),
**caractérisé en ce que** la courbe de pondération comprend une courbe d'histoire de pondération et une courbe de pondération de vitesse d'échantillonnage, la courbe d'histoire de pondération étant une courbe où la valeur maximale est définie selon les informations de déplacement acquises dans le passé et la courbe de pondération de vitesse d'échantillonnage étant une courbe où la valeur maximale est définie selon les informations de déplacement acquises quand le fil (20) se déplace en vitesse d'échantillonnage,
**caractérisé par** la réalisation du traitement de pondération utilisant la courbe d'histoire de pondération et du traitement de pondération utilisant la courbe de pondération de vitesse d'échantillonnage, et

extraire comme un degré de similarité cible le degré de similarité pondéré remplissant une condition d'extraction, de la pluralité des degrés de similarité pondérés sur lesquels le traitement de pondération a été effectué utilisant la courbe d'histoire de pondération et la pluralité des degrés de similarité pondérés sur lesquels le traitement de pondération a été effectué utilisant la courbe de pondération de vitesse d'échantillonnage, et pour acquérir de nouvelles informations de déplacement du fil (20) selon le degré de similarité pondéré cible.

17. Le procédé selon la revendication 16, **caractérisé par** la correction du facteur de pondération désigné par la courbe d'histoire et le facteur de pondération désigné par la courbe de pondération de vitesse d'échantillonnage selon le degré de similarité pondéré cible calculé dans le passé.

18. Le procédé selon la revendication 17, **caractérisé par** l'augmentation d'une valeur du facteur de pondération désigné par la courbe d'histoire de pondération accompagnant une augmentation du degré de similarité pondéré cible calculé dans le passé et pour augmenter une valeur du facteur de pondération désigné par la courbe de pondération de vitesse d'échantillonnage accompagnant une réduction du degré de similarité pondéré cible calculé dans le passé.

19. Le procédé selon une des revendications 16 à 18, **caractérisé par** l'extraction comme le degré de similarité cible du degré de similarité pondéré ayant une valeur de degré de similarité maximale parmi la pluralité de degrés de similarité pondérés,

quand l'extraction échoue, extraire comme degré de similarité pondéré cible un degré de similarité pondéré sur lequel le traitement de pondération a été effectué sur un degré de similarité ayant une valeur maximale parmi la pluralité de degrés de similarité pondérés calculés, et

quand l'extraction échoue, extraire de la pluralité de degrés de similarité pondérés comme un degré de similarité cible le degré de similarité pondéré ayant une valeur le plus proche du degré de similarité pondéré des informations acquises dans le passé.

20. Le procédé selon une des revendications 12 à 19, **caractérisé par** le calcul d'une pluralité de points maximum de degré de similarité qui sont respectivement des points maximum de la pluralité de degrés de similarité, et la réalisation du traitement de pondération aux points maximum de degré de similarité et pour calculer les degrés de similarité pondéré.

21. Le procédé selon une des revendications 12 à 20, comprenant en outre les étapes de mesurer un intervalle de période d'échantillonnage, l'intervalle de période d'échantillonnage étant un intervalle où chacun du premier signal d'irrégularité d'épaisseur de fil et du deuxième signal d'irrégularité d'épaisseur de fil est échantillonné, **caractérisé par** le calcul du délai selon l'intervalle de période d'échantillonnage mesuré.

# FIG. 1

# FIG. 2

# FIG. 3

EP 2 644 551 B1

FIG. 4

# FIG. 5

SIGNAL LEVEL

DOWNSTREAM FRAME

DOWNSTREAM RING BUFFER

[0]       [32]      [64]      [96]    [127]

index

UPSTREAM FRAME

SIGNAL LEVEL

FRAME DELAY AMOUNT

UPSTREAM RING BUFFER

MOVEMENT START POSITION

[0]       [32]      [64]      [96]    [127]

index

FIG. 6

# FIG. 7

SIMILARITY DEGREE

1

0

0          16          32

DELAY AMOUNT

FIG. 8

# FIG. 9

```
                    ┌─────────┐
                    │  START  │
                    └────┬────┘
                         │
                         ▼
        ┌──────────────────────────────┐
        │  BIAS COMPONENT REMOVAL /     │   S101
        │  NORMALIZATION PROCESSING     │
        │  OF DOWNSTREAM FRAME          │
        └──────────────┬───────────────┘
                       │
                       ▼
        ┌──────────────────────────────┐
        │  INITIALIZE DELAY AMOUNT      │   S102
        │  OF UPSTREAM FRAME            │
        └──────────────┬───────────────┘
                       │
                       ▼
        ┌──────────────────────────────┐
        │  BIAS COMPONENT REMOVAL /     │   S103
        │  NORMALIZATION PROCESSING     │
        │  OF UPSTREAM FRAME            │
        └──────────────┬───────────────┘
                       │
                       ▼
        ┌──────────────────────────────┐
        │      CALCULATE                │   S104
        │      SIMILARITY DEGREE        │
        └──────────────┬───────────────┘
                       │
                       ▼
        ┌──────────────────────────────┐
        │  SAVE DELAY AMOUNT IN WHICH   │   S105
        │  SIMILARITY DEGREE BECOMES    │
        │  MAXIMUM POINT                │
        └──────────────┬───────────────┘
                       │
                       ▼
              ◇ RANGE            S106
              OF MOVING FRAME ────── NO
              FINISHED?                │
                  │                    │
                 YES                   ▼
                  │            ┌─────────────┐
                  ▼            │    MOVE     │  S107
        ┌──────────────────┐   │  UPSTREAM   │
        │  ADOPTION        │   │   FRAME     │
        │  DETERMINATION   │   └─────────────┘
        │  PROCESSING      │   S108
        └────────┬─────────┘
                 │
                 ▼
        ┌──────────────────────────────┐
        │  CALCULATE SPEED IN           │   S109
        │  ACCORDANCE WITH ADOPTED      │
        │  DELAY AMOUNT                 │
        └──────────────┬───────────────┘
                       │
                       ▼
                  ┌─────────┐
                  │   END   │
                  └─────────┘
```

# FIG. 10

```
                    ADOPTION DETERMINATION
                         PROCESSING
                             │
                             ▼
            ┌─────────────────────────────────┐
            │  WEIGHTING PROCESSING ON        │ ╱ S201
            │      MAXIMUM POINT              │
            └─────────────────────────────────┘
                             │
                             ▼
            ┌─────────────────────────────────┐
            │      EXTRACT LARGEST            │ ╱ S202
            │  WEIGHTED MAXIMUM POINT         │
            └─────────────────────────────────┘
                             │
                             ▼
                        ╱ S203
                 ◇  LARGEST          ◇
                  WEIGHTED MAXIMUM         NO
                   POINT EXISTS IN    ─────────────┐
                     PLURALS?                      │
                             │ YES                 │
                             ▼                     │
            ┌─────────────────────────────────┐    │
            │   EXTRACT MAXIMUM POINT         │    │
            │  HAVING LARGEST SIMILARITY      │ ╱ S204
            │  DEGREE OF MAXIMUM POINTS       │    │
            │      BEFORE WEIGHTING           │    │
            └─────────────────────────────────┘    │
                             │                     │
                             ▼                     │
                        ╱ S205                      │
                  ◇ MAXIMUM POINT                   │
                 IN WHICH SIMILARITY DEGREE    NO   │
                BEFORE WEIGHTING BECOMES  ──────────┤
                 LARGEST EXISTS IN                  │
                     PLURALS?                       │
                             │ YES                  │
                             ▼                      │
            ┌─────────────────────────────────┐     │
            │   EXTRACT MAXIMUM POINT         │     │
            │    CLOSE TO PREVIOUS            │ ╱ S206
            │      DELAY AMOUNT              │     │
            └─────────────────────────────────┘     │
                             │                      │
                             ▼◄─────────────────────┘
                           END
```

# FIG. 11

SIMILARITY DEGREE

RAW MAXI-MUM POINT

WEIGHTING CURVE

WEIGHTING FACTOR

1

1

0

0 16 32

DELAY AMOUNT (c_index)

WEIGHT-ING

WEIGHTED SIMILARITY DEGREE

1

MAXIMUM VALUE

0

0 c_max_index 32

DELAY AMOUNT (c_index)

# FIG. 12A

# FIG. 12B

SIMILARITY DEGREE

WEIGHTING FACTOR

RAW SIMI-LARITY DEGREE

WEIGHTING CURVE

1

1

0

0    16    32

DELAY AMOUNT (c_index)

WEIGHT-ING

WEIGHTED SIMILARITY DEGREE

1    INCREASE IN MAXIMUM POINTS

0

0    c_max_index    32

DELAY AMOUNT (c_index)

# FIG. 13

DOWNSTREAM FRAME

SIGNAL LEVEL

DOWNSTREAM RING BUFFER

[0]　　　[32]　　　[64]　　　[96]　　　[127]

index

DOWNSTREAM FRAME

SIGNAL LEVEL

UPSTREAM RING BUFFER

[0]　　　[32]　　　[64]　　　　[119][127]

index

**FIG. 14A**

SPEED RATIO

| ... | 10/7 | 10/8 | 10/9 | 10/10 | 10/11 | 10/12 | 10/13 | 10/14 | 10/15 | 10/16 | ... |

B → 10/11   A → 10/13

**FIG. 14B**

FIRST HISTORY CORRECTION SPEED RATIO

| ... | 13/7 | 13/8 | 13/9 | 13/10 | 13/11 | 13/12 | 13/13 | 13/14 | 13/15 | 13/16 | ... |

C → 13/11   D → 13/13

**FIG. 14C**

SECOND HISTORY CORRECTION SPEED RATIO

| ... | 7/13 | 8/13 | 9/13 | 10/13 | 11/13 | 12/13 | 13/13 | 13/14 | 13/15 | 13/16 | ... |

FIG. 14D

## FIG. 15A

| | | | | | E | | | | | |
|---|---|---|---|---|---|---|---|---|---|---|
| SPEED RATIO | · · · | 10/7 | 10/8 | 10/9 | **10/10** | 10/11 | 10/12 | 10/13 | 10/14 | · · · |

## FIG. 15B

| | | | | | | | | | | |
|---|---|---|---|---|---|---|---|---|---|---|
| SAMPLING SPEED CORRECTION SPEED RATIO | · · · | **7/10** | **8/10** | **9/10** | **10/10** | 10/11 | 10/12 | 10/13 | 10/14 | · · · |

# FIG. 15C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012051672 A